# EUROPEAN PATENT APPLICATION

(11) **EP 2 826 545 A1**
(43) Date of publication of application: **21.01.2015**
(21) Application number: 13760545.7
(22) Date of filing: 14.03.2013
(51) Int. Cl.: B01D 69/08, B01D 71/76, D01D 5/24

(54) **DEVICE FOR PRODUCING HOLLOW POROUS FILM AND METHOD FOR PRODUCING HOLLOW POROUS FILM**

(30) Priority: 14.03.2012 JP 2012057291
(71) Applicant: Mitsubishi Rayon Co., Ltd., Tokyo 100-8253 (JP)
(72) Inventor: SUMI Toshinori, Otake-shi Hiroshima 739-0693 (JP); FUJIKI Hiroyuki, Otake-shi Hiroshima 739-0693 (JP); HIROMOTO Yasuo, Otake-shi Hiroshima 739-0693 (JP)
(74) Representative: Hoffmann Eitle
(86) International application number: PCT/JP2013/057147
(87) International publication number: WO 2013/137379

(57) **Abstract**

The present invention relates to a device for producing a hollow porous film, the device comprising a spinning nozzle that discharges/shapes a film-forming resin solution dissolved to at least a hydrophobic polymer to a favorable solvent, a processing vessel that houses a processing gas containing a nonsolvent of the hydrophobic polymer and includes a first opening through which the film-forming resin solution discharged/shaped from the spinning nozzle is introduced, and a second opening from which the film-forming resin solution having come into contact with the gas containing the nonsolvent of the hydrophobic polymer is led, a solidification tank which houses a solidification solution and into which the film-forming resin solution led from the second opening is introduced; and gas elimination means for eliminating the processing gas, which flows out of the first opening, from the vicinity of the spinning nozzle.

## Description

### TECHNICAL FIELD

The present invention relates to a device and method for producing a hollow porous film.

Priority is claimed on Japanese Patent Application No. 2012-057291, filed on March 14,2012, the content of which is incorporated herein by reference.

### BACKGROUND ART

In recent years, due to the rise of an interest in environmental pollution and the tightening of environmental regulations, a method using a hollow porous film, which is excellent in the completeness of separation, compactness, or the like, has come into the spotlight as a water treatment method.

A nonsolvent-phase separation method, which uses spinodal decomposition making a polymer solution porous by the phase separation of the polymer solution using a nonsolvent, is known as a method of producing a hollow porous film. Further, a wet or dry-wet spinning method (hereinafter, both spinning methods are collectively called as "wet spinning") is known as the nonsolvent-phase separation method.

A method including: preparing a film-forming resin solution, which contains a hydrophobic polymer, a hydrophilic polymer, and a solvent; discharging the film-forming resin solution from a spinning nozzle; obtaining a hollow fiber by solidifying the film-forming resin solution in a solidification solution; and eliminating a hydrophilic polymer is known as a method of producing a hollow porous film by wet spinning (Patent Documents 1 to 3).

In the nonsolvent-phase separation method, it is known that the diameter of a hole of a porous film to be obtained is affected by moisture that is present before solidification. Accordingly, the diameter of a hole of a porous film to be obtained is also affected by the humidity of a gas that is present between the spinning nozzle and the level of the solidification solution. For this reason, the humidity of a gas, which is present between the spinning nozzle and the level of the solidification solution, is required to be adjusted.

Further, if the film-forming resin solution discharged from the spinning nozzle comes into contact with water droplets present on the discharge surface when condensation occurs on the discharge surface of the spinning nozzle, the phase separation of the film-forming resin solution rapidly progresses and viscosity rapidly changes. When the contact between the water droplets and the film-forming resin solution is not uniform in the circumferential direction of the film-forming resin solution, the stability of spinning may deteriorate.

Accordingly, a method, which lowers humidity in the vicinity of a discharge surface of a spinning nozzle by adjusting the temperature of a solidification solution, is proposed in Patent Document 4. However, even in the method disclosed in Patent Document 4, it was not possible to sufficiently prevent condensation on the discharge surface of the spinning nozzle.

Furthermore, since it was difficult to precisely control the surface structure of a film in a producing method in the related art, the uniformity of the surface structure of a film was not high. For this reason, the quality of a hollow porous film was insufficient.

### CITATION LIST

### PATENT DOCUMENT

Patent Document 1: JP 2006-231276 A
Patent Document 2: JP 2008-126199 A
Patent Document 3: JP 2010-142747 A
Patent Document 4: Japanese Patent No. 4599689

### DISCLOSURE OF THE INVENTION

### PROBLEM TO BE SOLVED BY THE INVENTION

An object of the invention is to provide a device and method for producing a hollow porous film that can sufficiently prevent condensation on a discharge surface of a spinning nozzle, can precisely control the surface structure of the film, and can improve the quality of the hollow porous film by improving the uniformity of the surface structure of the film.

### MEANS FOR SOLVING PROBLEM

The invention includes the following aspects.
[1] A device for producing a hollow porous film, the device comprising:
   a spinning nozzle that discharges/shapes a film-forming resin solution containing at least a hydrophobic polymer and a favorable solvent;
   a processing vessel that houses a gas containing a nonsolvent of the hydrophobic polymer and includes a first opening through which the film-forming resin solution discharged/shaped from the spinning nozzle is introduced, and a second opening from which the film-forming resin solution having come into contact with the gas containing the nonsolvent of the hydrophobic polymer is led;
   a solidification tank which houses a solidification solution and into which the film-forming resin solution led from the second opening is introduced; and
   gas elimination means for eliminating the gas, which flows out of the first opening and contains the nonsolvent of the hydrophobic polymer, from the vicinity of the spinning nozzle.
[2] The device for producing a hollow porous film according to [1],
   wherein the processing vessel and the solidification solution housed in the solidification tank are separated from each other, and
   a gas supply pipe through which the gas containing the nonsolvent of the hydrophobic polymer is introduced into the processing vessel is mounted on the processing vessel.
[3] The device for producing a hollow porous film according to [1],
   wherein the second opening of the processing vessel is disposed so as to be closed by the solidification solution housed in the solidification tank, and
   a gas supply pipe through which the gas containing the nonsolvent of the hydrophobic polymer is introduced into the processing vessel is mounted on the processing vessel.
[4] The device for producing a hollow porous film according to any one of [1] to [3], wherein the gas elimination means is scavenging means for eliminating a processing gas, which flows out in the vicinity of the spinning nozzle, by scavenging the processing gas with a scavenging gas or suction means for eliminating the processing gas by sucking the processing gas.
[5] The device for producing a hollow porous film according to any one of [1] to [3],
   wherein the gas elimination means includes both scavenging means for eliminating a processing gas, which flows out in the vicinity of the spinning nozzle, by scavenging the processing gas with a scavenging gas and suction means for eliminating the processing gas by sucking the processing gas.
[6] The device for producing a hollow porous film according to [4] or [5],
   wherein the scavenging means includes a scavenging nozzle that is provided on a lower surface of the spinning nozzle, and
   the scavenging nozzle includes a gas discharge port through which the scavenging gas is discharged to the film-forming resin solution discharged from the spinning nozzle.
[7] The device for producing a hollow porous film according to [6],
   wherein the scavenging nozzle includes a resistance applying body that applies discharge resistance to the scavenging gas discharged from the gas discharge port.
[8] The device for producing a hollow porous film according to any one of [4] to [7],
   wherein the scavenging means includes gas filtering means for filtering the scavenging gas.
[9] The device for producing a hollow porous film according to any one of [4] to [8],
   wherein the scavenging means includes gas adjusting means for adjusting at least one of the temperature and humidity of the scavenging gas.
[10] The device for producing a hollow porous film according to any one of [4] to [9], further comprising:
   a protective tube that is disposed between the processing vessel and the scavenging nozzle so as to be separated from the processing vessel and includes a through hole into which the film-forming resin solution discharged from the spinning nozzle and the scavenging gas discharged from the scavenging nozzle are introduced.
[11] The device for producing a hollow porous film according to any one of [4] to [10],
   wherein the suction means includes a suction nozzle that is provided around the first opening on the upper surface of the processing vessel, and
   the suction nozzle includes a gas suction port through which a gas flowing out of the first opening and containing a nonsolvent of the hydrophobic polymer is sucked.
[12] The device for producing a hollow porous film according to [11],
   wherein the suction nozzle includes a resistance applying body that applies resistance to the gas to be sucked into the gas suction port.
[13] A method of producing a hollow porous film, the method comprising:
   a spinning step of discharging a film-forming resin solution downward from a spinning nozzle by using the device for producing a hollow porous film according to any one of [1] to [10];
   a solidification step of immersing the film-forming resin solution, which is discharged from the spinning nozzle, in a solidification solution housed in a solidification tank after allowing the film-forming resin solution to come into contact with a gas that is housed in the processing vessel and contains a nonsolvent of the hydrophobic polymer; and
   a scavenging step of sending a scavenging gas to a discharge-side surface of the spinning nozzle by scavenging means,
   wherein the relative humidity of the nonsolvent of the gas, which contains the nonsolvent of the hydrophobic polymer, is made to be higher than 60%, and the dew point of the scavenging gas is made to be lower than the surface temperature of the spinning nozzle.
[14] A method of producing a hollow porous film, the method comprising:
   a spinning step of discharging a film-forming resin solution downward from a spinning nozzle by using the device for producing a hollow porous film according to [11] or [12];
   a solidification step of immersing the film-forming resin solution, which is discharged from the spinning nozzle, in a solidification solution housed in a solidification tank after allowing the film-forming resin solution to come into contact with a gas that is housed in the processing vessel and contains a nonsolvent of the hydrophobic polymer; and
   a suction step of sucking the gas, which flows out of the first opening and contains the nonsolvent of the hydrophobic polymer, by suction means,
   wherein the dew point of the nonsolvent in the atmosphere present in the vicinity of the spinning nozzle is made to be lower than the surface temperature of the spinning nozzle.
[15] The method of producing a hollow porous film according to [13] or [14],
   wherein the relative humidity of the nonsolvent in the atmosphere present in the vicinity of the spinning nozzle is made to be lower than 10%.
[16] A method of producing a hollow porous film, the method comprising:
   a spinning step of discharging a film-forming resin solution downward from a spinning nozzle by using the device for producing a hollow porous film according to [5];
   a solidification step of immersing the film-forming resin solution, which is discharged from the spinning nozzle, in a solidification solution housed in a solidification tank after allowing the film-forming resin solution to come into contact with a gas that is housed in the processing vessel and contains a nonsolvent of the hydrophobic polymer;
   a scavenging step of sending a scavenging gas to a discharge-side surface of the spinning nozzle by scavenging means; and
   a suction step of sucking the gas, which flows out of the first opening and contains the nonsolvent of the hydrophobic polymer, and the scavenging gas,
   wherein at least the gas, which flows out of the first opening and contains the nonsolvent of the hydrophobic polymer, and the scavenging gas are sucked by suction means.
[17] The method of producing a hollow porous film according to any one of [13] to [15],
   wherein the gas, which contains the nonsolvent of the hydrophobic polymer, is air in which a nonsolvent is saturated.
[18] The method of producing a hollow porous film according to any one of [13] to [15],
   wherein the gas, which contains the nonsolvent of the hydrophobic polymer, is saturated vapor of a nonsolvent.

### EFFECT OF THE INVENTION

According to the device and method for a hollow porous film of the invention, it is possible to sufficiently prevent condensation on a discharge surface of a spinning nozzle, to precisely control the surface structure of the hollow porous film, to uniformize the surface structure of the film, and to improve the quality of the hollow porous film.

### BRIEF DESCRIPTION OF DRAWINGS

Fig. 1 is a schematic diagram illustrating a device for producing a hollow porous film according to a first embodiment of the invention;
Fig. 2 is a bottom view illustrating a scavenging nozzle that forms the device for producing a hollow porous film of Fig. 1;
Fig. 3 is a schematic diagram illustrating a device for producing a hollow porous film according to a second embodiment of the invention;
Fig. 4 is a schematic diagram illustrating a device for producing a hollow porous film according to a third embodiment of the invention;
Fig. 5 is a schematic diagram illustrating a device for producing a hollow porous film according to a fourth embodiment of the invention;
Fig. 6 is a schematic diagram illustrating a device for producing a hollow porous film according to a fifth embodiment of the invention;
Fig. 7 is a schematic diagram illustrating a device for producing a hollow porous film according to a sixth embodiment of the invention;
Fig. 8 is a schematic diagram illustrating a device for producing a hollow porous film according to a seventh embodiment of the invention;
Fig. 9 is a schematic diagram illustrating a device for producing a hollow porous film according to an eighth embodiment of the invention;
Fig. 10 is a schematic diagram illustrating a device for producing a hollow porous film according to a ninth embodiment of the invention;
Fig. 11 is a schematic diagram illustrating a device for producing a hollow porous film according to a tenth embodiment of the invention; and
Fig. 12 is a schematic diagram illustrating a device for producing a hollow porous film according to an eleventh embodiment of the invention.

### BEST MODE(S) FOR CARRYING OUT THE INVENTION

### First embodiment

A first embodiment of a device for producing a hollow porous film (hereinafter, abbreviated as a "producing device") of the invention will be described.

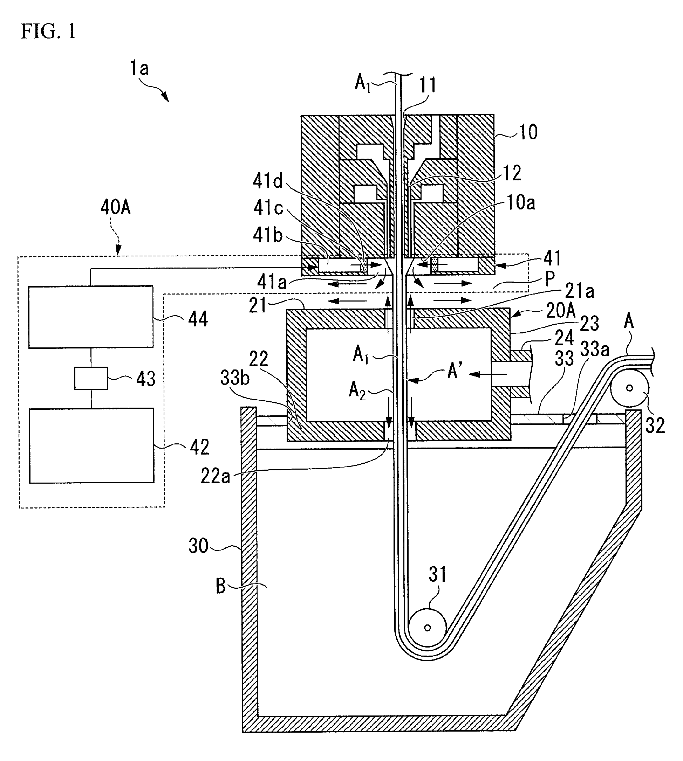

Fig. 1 illustrates the producing device of this embodiment. The producing device 1 a of this embodiment is a device for producing a hollow porous film from a film-forming resin solution that is made of at least a hydrophobic polymer dissolved in a favorable solvent. The producing device 1a includes a spinning nozzle 10, a processing vessel 20A that is disposed below the spinning nozzle 10, a solidification tank 30 that houses a solidification solution B, and scavenging means 40A for sending a scavenging gas to a discharge-side surface 10a (hereinafter, referred to as a "discharge surface 10a") of the spinning nozzle 10.

### (Spinning nozzle)

The spinning nozzle 10 of this embodiment is a nozzle including a support-through hole 11 through which a hollow string-like support A₁ passes and a resin solution-flow channel 12 for a film-forming resin solution. A discharge port of the resin solution-flow channel 12 (hereinafter, referred to as a "resin solution-discharge port") and a discharge port of the support-through hole 11 (hereinafter, referred to as a "support discharge port") are formed on the lower surface of the spinning nozzle 10. The resin solution-discharge port has an annular shape, and is formed outside the support discharge port in the shape of a circle that is concentric with the support discharge port of the support-through hole 11.

The spinning nozzle 10 allows the hollow string-like support A₁ to pass through the support-through hole 11, discharges the hollow string-like support A₁ downward from the support discharge port, allows the film-forming resin solution to flow in the resin solution-flow channel 12, and discharges the film-forming resin solution downward from the resin solution-discharge port. Accordingly, a coating film A₂ made of the film-forming resin solution is formed on the outer peripheral surface of the hollow string-like support A₁, so that a hollow fiber-shaped body A' is manufactured.

### (Processing vessel)

The processing vessel 20A is a vessel that houses a gas containing a nonsolvent of the hydrophobic polymer (hereinafter, referred to as a "processing gas") and allows the fiber-shaped body A', which is discharged from the spinning nozzle 10, to come into contact with the processing gas. Meanwhile, in the invention, the "nonsolvent" is a solvent of which the capacity of dissolving a hydrophobic polymer is low and is synonymous with a "poor solvent".

It is preferable that a nonsolvent have low solubility of a water-insoluble polymer and compatibility with a favorable solvent used in the film-forming resin solution as properties of a nonsolvent. Further, it is preferable that a nonsolvent have compatibility with a solvent used in the film-forming resin solution.

Furthermore, it is preferable that a nonsolvent has a saturated vapor pressure of 1 kPa or more at a temperature of 25°C or more, and it is preferable that a nonsolvent be changed into vapor by being boiled at a temperature of 150°C or less at atmospheric pressure. It is preferable that a nonsolvent be changed into vapor by being boiled at a temperature of 130°C or less at atmospheric pressure, and it is more preferable that a nonsolvent be changed into vapor by being boiled at a temperature of 110°C or less at atmospheric pressure.

Water, alcohol such as ethanol, acetone, toluene, ethylene glycol, a mixture of water and a favorable solvent used in a resin-forming resin solution, or the like can be used as a nonsolvent. Among them, water is particularly preferable.

The processing vessel 20A used in this embodiment is a cylindrical body that includes a flat ceiling portion 21, a flat bottom portion 22, and a cylindrical side portion 23. A first opening 21a through which the fiber-shaped body A' is introduced is formed at the ceiling portion 21, and a second opening 22a through which the fiber-shaped body A' is introduced is formed at the bottom portion 22. The diameter of the first opening 21a is equal to the diameter of the second opening 22a, or it may be possible to set the diameter of the second opening 22a to a diameter, which is larger than the diameter of the first opening 21 a, to inhibit the amount of the processing gas, which is housed in the processing vessel 20A and flows out of the first opening 21a, from becoming larger than the amount of the processing gas that flows out of the second opening 22a due to thermal buoyancy. Further, the diameters of the first and second openings 21 a and 22a are several times larger than the outer diameter of the fiber-shaped body A'. Furthermore, the second opening 22a is disposed above the level of the solidification solution B that is housed in the solidification tank 30. That is, since the processing vessel 20A is separated from the solidification solution B housed in the solidification tank in this embodiment, the second opening 22a is not closed by the solidification solution B.

Furthermore, a gas supply pipe 24 through which a processing gas is supplied into the processing vessel 20A is mounted on the side portion 23 of the processing vessel 20A.

The fiber-shaped body A' is introduced into the processing vessel 20A from the first opening 21 a, and the fiber-shaped body A' having come into contact with the processing gas housed in the processing vessel 20A is led to the outside from the second opening 22a.

Further, after passing through the inside of the processing vessel 20A, the processing gas supplied from the gas supply pipe 24 is discharged from the first and second openings 21 a and 22a.

### (Solidification tank)

The solidification tank 30 is formed of a storage tank that stores the solidification solution B containing a nonsolvent of a hydrophobic polymer, and allows the solidification solution B, which solidifies the coating film A₂ made of the film-forming resin solution, to come into contact with the film-forming resin solution. When the coating film A₂ made of the film-forming resin solution is solidified, the fiber-shaped body A' becomes a hollow porous film A.

The solidification tank 30 is provided with a first guide roller 31 that is disposed in the vicinity of a bottom portion of the solidification tank 30 and a second guide roller 32 that is disposed in the vicinity of an edge portion of the solidification tank 30. The first guide roller 31 changes the traveling direction of the fiber-shaped body into an obliquely upward direction by winding the fiber-shaped body A', which has passed through the processing vessel 20A, in the solidification solution B. The second guide roller 32 guides the hollow porous film A, which is formed while the fiber-shaped body A' passes through the solidification solution B, to the outside of the solidification tank 30.

Atop plate 33, which suppresses the evaporation of the solidification solution B, is provided at the upper portion of the solidification tank 30. The top plate 33 is provided with an opening 33a through which the hollow porous film A guided to the outside of the solidification tank 30 from the solidification solution B by the second guide roller 32 passes, and an opening 33b into which the processing vessel 20A is inserted. It is preferable that a seal mechanism for suppressing the evaporation of the solidification solution B be provided between the top plate 33 and the processing vessel 20A. Further, it is preferable that the opening 33a have the minimum area for allowing the top plate 33 to suppress the evaporation of a nonsolvent while the hollow porous film A passes through the opening 33a without coming into contact with the top plate 33. Furthermore, it is preferable that the opening 33a have the minimum area for allowing the processing gas flowing out of the second opening to be discharged and allowing the hollow porous film A to pass through the opening 33a while the hollow porous film A does not come into contact with the top plate 33.

### (Scavenging means)

The scavenging means 40A is gas elimination means for eliminating the processing gas, which flows out in the vicinity of the spinning nozzle 10, by substituting the processing gas with a scavenging gas. The scavenging means 40A includes a scavenging nozzle 41 that is provided on the discharge surface 10a of the spinning nozzle 10 and gas supply means 42 for supplying a scavenging gas to the scavenging nozzle 41. The scavenging nozzle 41 is disposed so as to be separated from the processing vessel 20A. For this reason, a gap P is formed between the scavenging nozzle 41 and the processing vessel 20A.

The scavenging nozzle 41 is formed of an annular member. The scavenging nozzle 41 includes a circular opening 41 a that is formed at the center thereof, a gas introduction chamber 41 b that is formed of an annular space which is connected to the gas supply means 42 and into which a scavenging gas is introduced, and an annular gas discharge port 41c through which the scavenging gas supplied from the gas introduction chamber 41b is discharged toward the discharge surface 10a of the spinning nozzle 10 exposed to the outside at the circular opening 41 a.

The circular opening 41a is disposed so that the center of the circular opening 41 a corresponds to the center of the support discharge port and the center of the resin solution-discharge port. Accordingly, the fiber-shaped body A' passes through the circular opening 41 a.

The gas introduction chamber 41 b is formed in the shape of a circle, which is concentric with the scavenging nozzle 41, so as to be closer to the outer peripheral side than the circular opening 41a.

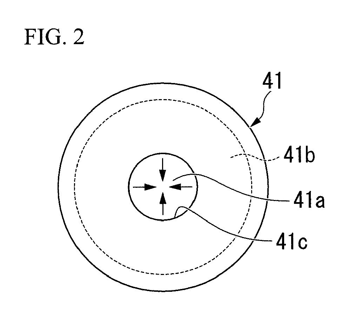

Since the gas discharge port 41c communicates with the gas introduction chamber 41b and is opened toward the center of the circular opening 41a as illustrated in Fig. 2, scavenging gas is discharged toward the center from the outer peripheral side of the circular opening 41 a.

In this embodiment, the length of the gas discharge port 41 c in a vertical direction is substantially equal to the length of the gas introduction chamber 41b in the vertical direction and an annular resistance applying body 41 d, which applies discharge resistance to the scavenging gas discharged from the gas discharge port 41 c, is provided at the gas discharge port 41c.

The resistance applying body 41 d serves as a flow channel resistor while the scavenging gas passes through the resistance applying body 41 d. For example, a mesh, a continuous foam body, a porous body, or the like is used as the resistance applying body 41 d.

When the resistance applying body 41d is provided at the gas discharge port 41c and a gas discharge pressure loss, which is several to several ten times larger than the pressure loss of a gas flowing in the annular space formed in the gas introduction chamber 41 b, is taken, pressure irregularity acting on the gas discharge port 41 c is reduced. For this reason, it is possible to further uniformize the amount of a gas, which is discharged from the gas discharge port 41 c, in the circumferential direction, so that it is possible to more stably perform scavenging.

Further, it is preferable that a straightening body for straightening the flow of the scavenging gas discharged from the gas discharge port 41 c be provided at the gas discharge port 41c. When the straightening body is provided at the gas discharge port 41 c, the directivity of the scavenging gas discharged from the gas discharge port 41 c is improved. As a result, scavenging efficiency is improved. For example, a lattice formed of a plate-like article, a honeycomb structure, a mesh, or the like is used as the straightening body.

Furthermore, the scavenging means 40A of this embodiment includes gas filtering means 43 and gas adjusting means 44 that are provided on the downstream side of the gas supply means 42. The gas filtering means 43 filters the scavenging gas, and the gas adjusting means 44 adjusts the temperature and humidity of the scavenging gas that is supplied to the scavenging nozzle 41. In this embodiment, the gas adjusting means 44 is disposed on the downstream side of the gas filtering means 43.

A known filter, for example, a fiber wound on a porous cylinder, a machined porous sheet, a cylindrical porous sintered body, a hollow porous film, or the like can be used as the gas filtering means 43.

Since foreign materials, such as dust, contained in the scavenging gas can be eliminated if the scavenging means 40A includes the gas filtering means 43, it is possible to prevent foreign materials from adhering to the fiber-shaped body A' passing through the circular opening 41a. Accordingly, it is possible to improve the quality of a hollow porous film A to be obtained.

The gas filtering accuracy of the gas filtering means 43 is appropriately selected depending on the cleanliness of a gas supplied to the scavenging nozzle 41, the filtering accuracy of the hollow porous film A to be produced, and the like. However, it is preferable that the gas filtering accuracy of the gas filtering means 43 be high in terms of the suppression of the generation of a film defect caused by the abnormal formation of a film structure that may occur due to foreign materials adhering to the fiber-shaped body A' in a solidification step, a film surface damage that may occur in steps after the solidification step, and the like. Specifically, the gas filtering accuracy is preferably 1 µm or less, more preferably 0.1 µm or less, and still more preferably 0.01 µm or less.

The gas adjusting means 44, which is used in this embodiment, includes at least one of gas humidity adjusting means for adjusting the humidity of the scavenging gas supplied to the scavenging nozzle 41 and gas temperature adjusting means for adjusting the temperature of the scavenging gas supplied to the scavenging nozzle 41. By including the gas adjusting means 44, it is possible to adjust the amount of moisture absorbed in the fiber-shaped body A' passing through the scavenging gas and the amount of heat transferred to the spinning nozzle 10 or the fiber-shaped body A. Accordingly, it is possible to stabilize the surface structure and quality of a hollow porous film A to be obtained. Further, when the humidity of the scavenging gas is adjusted by the gas humidity adjusting means, it becomes easy to prevent moisture (nonsolvent), which is contained in the scavenging gas, from being condensed on the discharge surface 10a. When the temperature of the scavenging gas is adjusted by the gas temperature adjusting means, it is possible to prevent the significant change of the temperature of the spinning nozzle 10 or the fiber-shaped body A'. Here, "humidity" is a value (unit: %) that is obtained from "the amount of a nonsolvent contained in a gas at certain temperature/the amount of a saturated nonsolvent at the temperature×100".

Examples of the gas adjusting means 44 include means using a dehumidifying device, such as a cooling condenser, as the gas humidity adjusting means and using a gas heating device as the gas temperature adjusting means when dehumidifying the scavenging gas to prevent the condensation of moisture (nonsolvent), which is contained in the scavenging gas, on the discharge surface 10a. In this gas adjusting means 44, a gas passes through the dehumidifying device so that the humidity of the gas is reduced to relative humidity in which the moisture contained in the gas is not condensed on the discharge surface 10a, and the gas is heated to predetermined temperature by the gas heating device as necessary.

Examples of the gas adjusting means 44 include means using a humidifying device, which generates a gas saturated with moisture at predetermined temperature by eliminating floating fine particles with a mist separator or the like after supplying a scavenging gas to a space into which water having predetermined temperature has been sprayed, as the gas humidity adjusting means and using a gas heating device as the gas temperature adjusting means when supplying the scavenging gas, which has been adjusted to certain humidity at certain temperature, to the scavenging nozzle 41. In this gas adjusting means 44, a gas is humidified by the humidifying device so as to be changed into a gas saturated with moisture and the gas saturated with moisture is heated by the heating device. As a result, a scavenging gas having desired temperature and humidity can be obtained.

Further, when dry air having a relative humidity of about 1% at room temperature is supplied to a factory or the like, the gas humidity adjusting means may be omitted, the dry air may be changed into heated dry air by being adjusted to predetermined temperature with the gas temperature adjusting means, and the heated dry air may be supplied to the scavenging nozzle 41.

### (Method of producing hollow porous film)

A method of producing of the hollow porous film A using the producing device 1a will be described. This producing method includes a spinning step, a scavenging step, and a solidification step.

### [Spinning step]

In the spinning step of this embodiment, a film-forming resin solution is discharged downward from the resin solution-discharge port while the hollow string-like support A₁ is discharged downward from the support discharge port of the spinning nozzle 10. Accordingly, the coating film A₂ made of the film-forming resin solution is formed on the outer peripheral surface of the hollow string-like support A₁, so that the hollow fiber-shaped body A' is manufactured.

A knitted cord or a braided cord can be used as the hollow string-like support A₁ used in this embodiment. Examples of a fiber, which forms the knitted cord or the braided cord, include a synthetic fiber, a semisynthetic fiber, a recycled fiber, and a natural fiber. Further, the form of the fiber may be any one of a monofilament, a multifilament, and spun yarn.

The film-forming resin solution contains at least a hydrophobic polymer and a favorable solvent that dissolves the hydrophobic polymer. The film-forming resin solution may contain other additive components, such as a hydrophilic polymer, as necessary.

Examples of the hydrophobic polymer include a polysulfone resin, such as polysulfone or polyethersulfone, a fluorine resin, such as polyvinylidene fluoride, polyacrylonitrile, cellulose derivative, polyamide, polyester, polymethacrylate, and polyacrylate. Further, examples of the hydrophobic polymer may be a copolymer of them. One kind of hydrophobic polymer may be used alone, and two or more kinds of hydrophobic polymers may be used together.

Among the hydrophobic polymers, a fluorine resin is preferable and a copolymer made of a monomer different from polyvinylidene fluoride or vinylidene fluoride is preferable, in terms of excellent durability against an oxidizing agent such as hypochlorous acid.

The hydrophilic polymer is to be added to adjust the viscosity of the film-forming resin solution to a range, which is suitable for the formation of the hollow porous film A, and to stabilize a film-forming state. Polyethylene glycol, polyvinylpyrrolidone, or the like is preferably used as the hydrophilic polymer. Among these, polyvinylpyrrolidone or a copolymer in which other monomers are copolymerized with polyvinylpyrrolidone is preferable in terms of the control of the diameter of a hole of a hollow porous film A to be obtained or the strength of the hollow porous film A.

Further, two or more kinds of resins can be mixed and used as the hydrophilic polymer. For example, when a hydrophilic polymer having a higher molecular weight is used as the hydrophilic polymer, a hollow porous film A having a good film structure tends to be easily formed. Meanwhile, a hydrophilic polymer having a low molecular weight is suitable since being more easily eliminated from the hollow porous film A. Accordingly, the same kind of hydrophilic polymers having different molecular weights may be appropriately blended and used according to a purpose.

Examples of the favorable solvent include N,N-dimethylformamide, N,N-dimethylacetamide, dimethylsulfoxide, N-methyl-2-pyrrolidone, and N-Methylmorpholine N-oxide, and one or more kinds of them can be used as the favorable solvent. Furthermore, a favorable solvent to which a nonsolvent of a hydrophobic polymer or a hydrophilic polymer is mixed without the deterioration of the solubility of a hydrophobic polymer or a hydrophilic polymer in a solvent may be used.

The temperature of the film-forming resin solution is not particularly limited, but is generally in the range of 20 to 80°C and preferably in the range of 20 to 40°C.

When the concentration of a hydrophobic polymer in the film-forming resin solution is excessively low or high, stability at the time of the formation of a film is deteriorated and a desired hollow porous film A tends to be not easily obtained. Accordingly, the lower limit of the concentration of a hydrophobic polymer in the film-forming resin solution is preferably 10 mass% and more preferably 15 mass%. Moreover, the upper limit of the concentration of a hydrophobic polymer in the film-forming resin solution is preferably 30 mass% and more preferably 25 mass%.

Meanwhile, the lower limit of the concentration of the hydrophilic polymer is preferably I mass% and more preferably 5 mass% so that the hollow porous film A is more easily formed. The upper limit of the concentration of the hydrophilic polymer is preferably 20 mass% and more preferably 12 mass% in terms of the handleability of the film-forming resin solution.

### [Scavenging step]

The scavenging step of this embodiment is a step of sending the scavenging gas to the discharge surface 10a of the spinning nozzle 10.

Specifically, in the scavenging step, the scavenging gas supplied from the gas supply means 42 is filtered first by the gas filtering means 43, and is supplied to the gas introduction chamber 41 b after the temperature and humidity of the scavenging gas are adjusted by the gas adjusting means 44. At that time, in terms of the further prevention of the condensation of moisture on the discharge surface 10a, it is preferable that the scavenging gas be adjusted by the gas adjusting means 44 so that the dew point of the scavenging gas is lower than the surface temperature of the discharge surface of the spinning nozzle 10. Further, in order to prevent the temperature of the spinning nozzle 10 or the fiber-shaped body A' from being changed from a preset state, it is preferable that the scavenging gas be supplied while the temperature of the scavenging gas is maintained at the same temperature as the preset temperature of the spinning nozzle 10.

Next, the pressure distribution of the scavenging gas is uniformized in the gas introduction chamber 41 b by the resistance applying body 41 d that is provided at the gas discharge port 41c. After that, the scavenging gas, which is present in the gas introduction chamber 41 b, is discharged toward the center of the circular opening 41a through the resistance applying body 41d of the gas discharge port 41c, and is sent to the discharge surface 10a. The scavenging gas, which is discharged to the circular opening 41a, pushes the processing gas, which flows out in the vicinity of the discharge surface 10a, and is discharged to the outside through the gap P, which is formed between the scavenging nozzle 41 and the processing vessel 20A, together with the pushed processing gas.

In the scavenging step, the dew point of a nonsolvent in the atmosphere in the vicinity of the spinning nozzle 10 is set to be lower than the surface temperature of the spinning nozzle 10. When the dew point of a nonsolvent in the atmosphere in the vicinity of the spinning nozzle 10 is equal to or higher than the surface temperature of the spinning nozzle 10, it is difficult to prevent the condensation of moisture. Here, "the dew point of a nonsolvent in the atmosphere" is a temperature in which a nonsolvent, which cannot be contained in the atmosphere, starts to be condensed when the temperature of the atmosphere is lowered since the amount of a nonsolvent capable of being contained in the atmosphere is equal to the amount of a nonsolvent contained in the atmosphere.

Further, in terms of the further prevention of the condensation of moisture that is performed by the scavenging step, it is preferable that the relative humidity of a nonsolvent in the atmosphere in the vicinity of the spinning nozzle be set to be lower than 10%. Here, "the relative humidity of a nonsolvent in the atmosphere" is a value (unit: %) that is obtained from "the amount of a nonsolvent contained in the atmosphere at certain temperature/the amount of a saturated nonsolvent at the temperature×100".

### [Solidification step]

The solidification step is a step of immersing the film-forming resin solution in the solidification solution B housed in the solidification tank 30 after allowing the film-forming resin solution, which is discharged from the spinning nozzle 10, to come into contact with the processing gas housed in the processing vessel 20A.

In the solidification step of this embodiment, the fiber-shaped body A' comes into contact with the processing gas housed in the processing vessel 20A and the solidification solution B housed in the solidification tank 30. Accordingly, the coating film A₂ made of the film-forming resin solution and formed on the fiber-shaped body A' is solidified, so that the hollow porous film A is obtained.

Specifically, in the spinning step, the fiber-shaped body A' on which the coating film A₂ made of the film-forming resin solution is formed is introduced into the processing vessel 20A from the first opening 21 a of the processing vessel 20A and comes into contact with the processing gas.

Nonsolvent components, which are contained in the processing gas, are diffused and permeate into the coating film A₂ having come into contact with the processing gas. When the film-forming resin solution of the coating film A₂ exceeds a limit in which the hydrophobic polymer of the film-forming resin solution of the coating film A₂ can be present in a liquid phase in the solution, the hydrophobic polymer starts to be separated from the favorable solvent or the hydrophilic polymer dissolved in the favorable solvent and is changed into a solid phase from a liquid phase. Accordingly, a network structure, which forms the skeleton of a film, develops.

After that, the fiber-shaped body A' having passed through the processing vessel 20A is made to travel toward the first guide roller 31 that is provided in the solidification tank 30 in which the solidification solution B is housed, and the traveling direction of the fiber-shaped body A' is reversed at the first guide roller 31. When the coating film A₂ made of the film-forming resin solution comes into contact with the solidification solution B, nonsolvent components of the solidification solution B are diffused into the coating film A₂ made of the film-forming resin solution and solvent components contained in the coating film A₂ are diffused into the solidification solution B. Since a large amount of a nonsolvent of the solidification solution B quickly permeates into the coating film A₂ made of the film-forming resin solution in comparison with the processing gas, the phase separation of the hydrophobic polymer of the film-forming resin solution completely occurs and the development of the network structure stops. Accordingly, the network structure, which forms the skeleton of a film, is fixed. However, since the hydrophobic polymer is swollen by the favorable solvent at this time, the mechanical strength of the hydrophobic polymer is low and the hydrophobic polymer is easily deformed by an external force.

As the favorable solvent contained in the coating film A₂ is diffused into the solidification solution B, the amount of favorable solvent components of liquid-phase components contained in the coating film A₂ is reduced and the amount of the nonsolvent components thereof is increased. Accordingly, the hydrophobic polymer is changed into a solidified state from a swollen state, so that the mechanical strength of the coating film A₂ is significantly increased. There is obtained a hollow porous film A in which a three-dimensional network structure in which a hydrophobic polymer and a gel-like hydrophilic polymer are tangled with each other and of which deformation resistance against an external force is increased is formed in the outer peripheral surface and the inside of the hollow porous film A.

The hollow porous film A, which is obtained by solidification, is transferred to the next step, which is performed outside the solidification tank 30, through the second guide roller 32.

The solidification solution B is a nonsolvent of the hydrophobic polymer, and is a favorable solvent of the hydrophilic polymer. Examples of the solidification solution B include water, ethanol, methanol, and a mixture thereof. However, among them, a liquid mixture of water and the solvent used in the film-forming resin solution is preferable in terms of safety and operation management.

Examples of the processing gas include air in which a nonsolvent is saturated, air in which a nonsolvent is not saturated, the saturated vapor of a nonsolvent, and the superheated vapor of a nonsolvent.

Meanwhile, when the hydrophobic polymer is polyvinylidene fluoride and the hydrophilic polymer is polyvinylpyrrolidone, water, alcohol such as ethanol, acetone, toluene, ethylene glycol, or the like can be used as a nonsolvent of the hydrophobic polymer contained in the processing gas.

When the processing gas is air in which a nonsolvent is saturated (hereinafter, referred to as "nonsolvent-saturation air"), the air present around the fiber-shaped body A' passing through the processing vessel 20A contains the most amount of a nonsolvent that can hold air at the temperature of the processing vessel 20A. For this reason, the amount of a nonsolvent, which can be supplied to the film-forming resin solution passing through the processing vessel 20A per unit time by the air in which a nonsolvent is saturated, is large in comparison with air in which a nonsolvent is not saturated and has the same temperature. That is, a large amount of a nonsolvent can be supplied in a short time.

Further, since the air cannot hold a nonsolvent of which the amount is equal to or larger than the amount of a saturated nonsolvent at that temperature, the humidity of a nonsolvent can be stably maintained when the processing gas is the nonsolvent-saturation air.

Furthermore, as a special state, there may be a case in which mist (fine droplets) of a nonsolvent floats in the air in which a nonsolvent is saturated and which has a certain temperature. The air in which a nonsolvent is saturated can supply not only a nonsolvent contained the air but also a nonsolvent corresponding to mist to the film-forming resin solution that passes through the processing vessel 20A. When mist floating in the air is fine so as to have a diameter of about several µm, the mist moves together with the air while floating in the air. When the mist comes into contact with the film-forming resin solution, the mist is immediately diffused and absorbed in the film-forming resin solution. For this reason, an adverse effect on the formation of a surface structure, which may occur when large droplets come into contact with the film-forming resin solution, does not occur.

Examples of a method of generating air which contains the mist and in which a nonsolvent is saturated include a method of suddenly lowering the temperature of air in which a nonsolvent is saturated and which has a high temperature, and a method of mixing air, in which a nonsolvent having the same temperature as the air is changed into mist by a ultrasonic mist generating device or the like and a nonsolvent is saturated, to air in which a nonsolvent is saturated.

When the nonsolvent-saturation air comes into contact with the coating film A₂, a nonsolvent contained in the nonsolvent-saturation air is diffused and permeates into the coating film A₂. A diffusion rate at this time depends on the concentration of a nonsolvent in the nonsolvent-saturation air and the coating film A₂. When the concentration of a nonsolvent in the coating film A₂ is 0 or very low, the diffusion rate depends on the concentration of a nonsolvent in the nonsolvent-saturation air.

If the surface temperature of the coating film A₂ is lower than the condensation temperature of a nonsolvent contained in the nonsolvent-saturation air (corresponding to the dew point when a nonsolvent component is water) when the nonsolvent-saturation air comes into contact with the coating film A₂, a nonsolvent is condensed on the surface of the coating film A₂ and the concentration of a nonsolvent on the surface of the coating film A₂ becomes about 100%. For this reason, the diffusion rate of a nonsolvent into the coating film A₂ is rapidly increased.

Since the coating film A₂ obtains the heat of condensation when a nonsolvent is condensed on the surface of the coating film A₂, the surface temperature of the coating film A₂ rises. When a difference between the temperature of the nonsolvent-saturation air and the surface temperature of the coating film A₂ is reduced due to the rise of the surface temperature of the coating film A₂, the amount of a condensed nonsolvent is reduced. Meanwhile, since the humidity and temperature of a nonsolvent contained in the nonsolvent-saturation air in the vicinity of the coating film ₂ are lowered (corresponding to relative humidity when a nonsolvent component is water) as much as a nonsolvent is condensed on the surface of the coating film A₂, the nonsolvent-saturation air becomes low-temperature air in which a nonsolvent is saturated or not saturated. In this state, capability to supply a nonsolvent is reduced in comparison with the original nonsolvent-saturation air.

In order to quickly supply a large amount of a nonsolvent to the coating film A₂, it is advantageous that a difference between the temperature of the coating film A₂ and the temperature of the nonsolvent-saturation air is larger and the concentration of a nonsolvent is higher. For this reason, in order to maintain capability to supply a nonsolvent at a high level, it is preferable to promptly eliminate air of which capability to supply a nonsolvent has been reduced from the vicinity of the surface of the coating film A₂ and to exchange the air for new nonsolvent-saturation air.

Meanwhile, since a nonsolvent or heat moves to the fiber-shaped body A' when a fixed amount of nonsolvent-saturation air is supplied into the processing vessel 20A from the outside through the gas supply pipe 24, the temperature of the processing gas or the humidity of a nonsolvent changes. However, since the processing gas having come into contact with the fiber-shaped body A' flows toward the opening from a space around the fiber-shaped body A' and is discharged to the outside in this embodiment, nonsolvent-saturation air can always be present around the fiber-shaped body A'. Further, since the nonsolvent-saturation air discharged from the first opening 21 a is eliminated by the scavenging means 40A before reaching the discharge surface 10a of the spinning nozzle 10, the condensation of a nonsolvent on the discharge surface 10a is prevented.

When the processing gas is the saturated vapor of a nonsolvent, all the space around the fiber-shaped body A' passing through the processing vessel 20A is filled with a nonsolvent. Features, which are obtained when the processing gas is saturated water vapor under the atmospheric pressure, will be described below.

The temperature of saturated water vapor under the atmospheric pressure is about 100°C, and the inside space of the processing vessel 20A filled with saturated water vapor is filled with only water molecules. Water is in a vapor-liquid equilibrium state at a temperature of about 100°C. Accordingly, when the phase of water is changed to liquid from gas, water releases a large amount of heat of condensation and the volume of water is reduced to about 1/1700. Further, when saturated water vapor is absorbed in the film-forming resin solution, saturated water vapor instantly moves into a space having been occupied by the saturated water vapor from the other space around the space.

If saturated water vapor of which the amount is equal to or larger than the amount of saturated water vapor condensed due to the release of heat from the surface of the processing vessel 20A, the amount of saturated water vapor absorbed in the fiber-shaped body A', and the amount of saturated water vapor flowing out of the opening is supplied to the processing vessel 20A when the processing gas is saturated water vapor, a temperature of about 100°C and a humidity of 100% are obtained at any portion in the processing vessel 20A. Accordingly, when saturated water vapor is used as the processing gas, it is easy to uniformize the temperature and humidity of the atmosphere around the fiber-shaped body A'.

Further, saturated water vapor can increase the amount of moisture and heat, which are supplied to the fiber-shaped body A' passing through the processing vessel 20A per unit time, in comparison with other gases containing moisture. For this reason, in comparison with a gas that is not saturated and contains water, it is possible to shorten the length of the fiber-shaped body A' passing through the processing vessel if a film-formation rate is constant and to increase a film-formation rate or supply more water to the fiber-shaped body A' if the length of the fiber-shaped body passing through the processing vessel is constant. It is also possible to supply water that is required for phase separation.

Furthermore, when saturated water vapor having the atmospheric pressure is generated by the reduction of the pressure of pressurized water vapor, mist (fine water droplets) having a diameter of about several µm may float in water vapor. Since the fine mist is immediately absorbed in the film-forming resin solution when coming into contact with the film-forming resin solution, an adverse effect on the formation of a surface structure does not occur.

Moreover, since the amount of the heat of condensation, which is generated when water vapor is condensed, is very large and heat transfer in condensation has high heating efficiency, the temperature of the vicinity of the surface layer of the fiber-shaped body A' can be instantly raised to about 100°C. For this reason, phase separation behavior, which is completely different from phase separation behavior occurring when the fiber-shaped body A' passes through the gas that is not saturated and contains water, can occur due to the supply of moisture and heat in the condensation of saturated water vapor that is caused by a difference between the temperature of the fiber-shaped body A' and the temperature of saturated water vapor. Depending on film-forming conditions, it is also possible to further fix a structure by forming the structure of phase separation only in the vicinity of the surface layer of the fiber-shaped body A' in the processing vessel 20A.

When saturated water vapor is supplied into the processing vessel 20A from the outside through the gas supply pipe 24, the release of heat from the surface of the processing vessel 20A is compensated with the heat of condensation of saturated water vapor. Accordingly, it is easy to maintain a temperature of about 100°C. Further, it is also possible to adjust the amount of saturated water vapor to be supplied so that temperature in the processing vessel 20A is maintained at about 100°C by allowing saturated water vapor to always flow out of the first opening 21 a. Alternatively, it is also possible to control temperature by feeding back temperature to a device for adjusting the amount of saturated water vapor to be supplied.

Furthermore, since saturated water vapor from the first opening 21 a is eliminated by the scavenging means 40A before reaching the discharge surface 10a of the spinning nozzle 10, the condensation of water on the discharge surface 10a is prevented.

### (Effects)

In this embodiment, it is possible to eliminate the processing gas, which flows out of the first opening 21 a of the processing vessel 20A, from the vicinity of the discharge surface 10a by substituting the processing gas with a scavenging gas by using the scavenging means 40A. Accordingly, even when the humidity of the atmosphere in the vicinity of the discharge surface 10a of the spinning nozzle 10 is increased due to other reasons except for the processing gas, it is possible to prevent the condensation of a nonsolvent on the discharge surface 10a. Therefore, it is possible to precisely control the surface structure of a hollow porous film A to be obtained, to uniformize the surface structure of the film, and to improve the quality of the hollow porous film A.

Further, since the processing vessel 20A and the solidification solution B are separated from each other in this embodiment, the processing gas is hardly affected by the diffusion of a nonsolvent from the solidification solution or the transfer of heat. Accordingly, the controllability of the temperature and humidity of the processing gas housed in the processing vessel 20B is improved.

Furthermore, since the processing gas is supplied to the processing vessel 20A through the gas supply pipe 24 in this embodiment, it is possible to adjust the temperature and humidity of the processing gas independently of the temperature of the solidification solution B and the concentration of a nonsolvent. Accordingly, it is possible to more precisely control the film structure of the hollow porous film A.

### Second embodiment

A second embodiment of the producing device of the invention will be described.

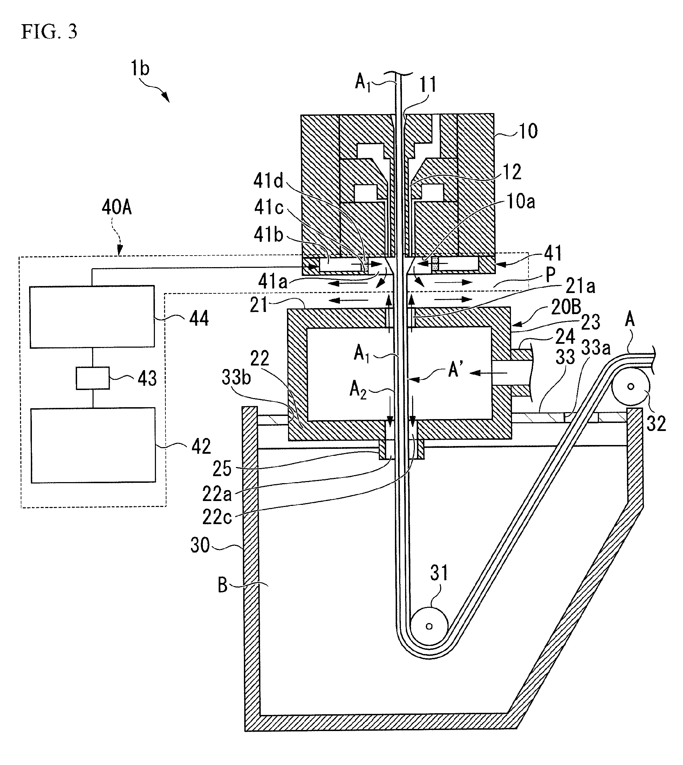

Fig. 3 illustrates a producing device of this embodiment. The producing device 1b of this embodiment includes a spinning nozzle 10, a processing vessel 20B that is disposed on the downstream side of the spinning nozzle 10, a solidification tank 30 that houses a solidification solution B, and scavenging means 40A for sending a scavenging gas to a discharge surface 10a of the spinning nozzle 10. A spinning nozzle, a solidification tank, and scavenging means, which are the same as those of the first embodiment, are used as the spinning nozzle 10, the solidification tank 30, and the scavenging means 40A of this embodiment.

The processing vessel 20B used in this embodiment is a cylindrical body that includes a ceiling portion 21, a bottom portion 22, and a side portion 23. A first opening 21 a through which a fiber-shaped body A' is introduced is formed at the ceiling portion 21. A through hole 22c is formed at the bottom portion 22, and a pipe portion 25, which has an inner diameter equal to the diameter of the through hole 22c, is connected to the bottom portion 22. An opening of the pipe portion 25, which is opposite to the through hole 22c, is referred to as a second opening 22a.

In the processing vessel 20B, the diameters of the first and second openings 21 a and 22a are equal to each other, and are about several times larger than the outer diameter of the fiber-shaped body A'. Further, the second opening 22a is disposed below the level of the solidification solution B. That is, in this embodiment, the second opening 22a is closed by the solidification solution B.

Furthermore, a gas supply pipe 24 through which a processing gas is supplied into the processing vessel 20B is mounted on the side portion 23 of the processing vessel 20B.

The fiber-shaped body A' is introduced into the processing vessel 20B from the first opening 21 a, and the fiber-shaped body A' having come into contact with the processing gas housed in the processing vessel 20B is led to the solidification solution B from the second opening 22a.

Further, after passing through the inside of the processing vessel 20B, the processing gas supplied from the gas supply pipe 24 is discharged from only the first opening 21 a.

### (Effects)

Even in this embodiment, as in the first embodiment, it is possible to eliminate the processing gas, which flows out of the first opening 21a, from the vicinity of the discharge surface 10a by substituting the processing gas with a scavenging gas by using the scavenging means 40A. Accordingly, it is possible to prevent the condensation of a nonsolvent on the discharge surface 10a Therefore, it is possible to precisely control the surface structure of a hollow porous film A to be obtained, to uniformize the surface structure of the film, and to improve the quality of the hollow porous film A.

Further, since the bottom portion 22 of the processing vessel 20B and the solidification solution B are separated from each other in this embodiment, the processing gas is hardly affected by the diffusion of a nonsolvent from the solidification solution or the transfer of heat. Accordingly, the controllability of the temperature and humidity of the processing gas housed in the processing vessel 20B is improved. Furthermore, since the fiber-shaped body A' does not come into contact with outside air through the pipe portion 25, it is possible to prevent temperature fluctuation or the adherence of dust or the like. Accordingly, it is possible to further improve the quality of the hollow porous film A.

### Third embodiment

A third embodiment of the producing device of the invention will be described.

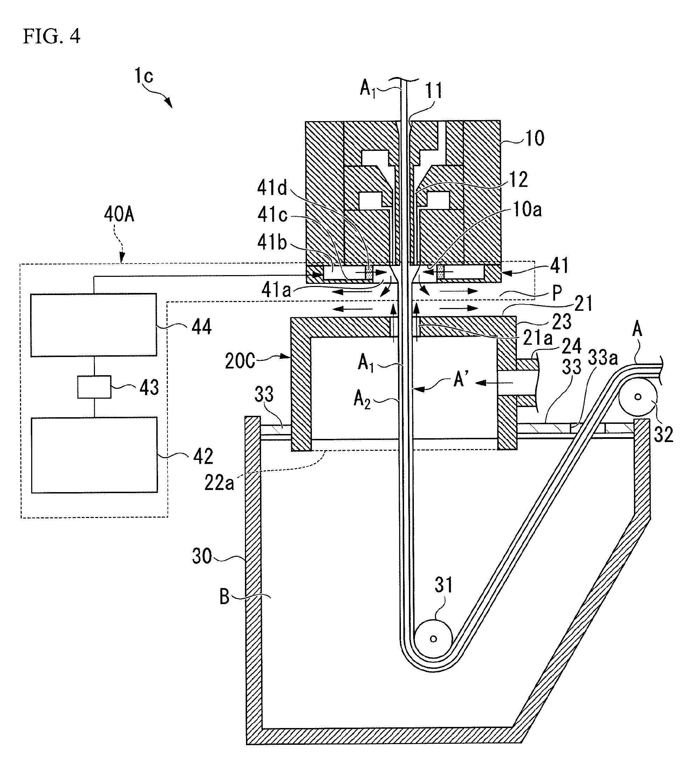

Fig. 4 illustrates a producing device of this embodiment. The producing device 1c of this embodiment includes a spinning nozzle 10, a processing vessel 20C that is disposed on the downstream side of the spinning nozzle 10, a solidification tank 30 that houses a solidification solution B, and scavenging means 40A for sending a scavenging gas to a discharge surface 10a of the spinning nozzle 10.

A spinning nozzle, a solidification tank, and scavenging means, which are the same as those of the first embodiment, are used as the spinning nozzle 10, the solidification tank 30, and the scavenging means 40A of this embodiment.

The processing vessel 20C of this embodiment is a cylindrical body that includes a ceiling portion 21 and a side portion 23 but does not include a bottom portion. A circular first opening 21 a through which a fiber-shaped body A' is introduced is formed at the ceiling portion 21. The diameter of the first opening 21 a is slightly larger than the outer diameter of the fiber-shaped body A'. Further, the processing vessel 20C does not include a bottom portion, and is provided with a second opening 22a.

Furthermore, a gas supply pipe 24 through which a processing gas is supplied into the processing vessel 20C is mounted on the side portion 23 of the processing vessel 20C.

The fiber-shaped body A' is introduced into the processing vessel 20C from the first opening 21a, and the fiber-shaped body A' having come into contact with the processing gas housed in the processing vessel 20C is led to the outside from the second opening 22a.

The processing vessel 20C of this embodiment is disposed so that a lower portion of the processing vessel 20C is opened by the second opening 22a and the second opening 22a is closed by the solidification solution B. A part of the solidification solution B enters the lower portion of the processing vessel 20C, and a nonsolvent volatilized from the solidification solution B can be evaporated into the gas that is present at a portion of the processing vessel 20C where the solidification solution B does not enter. Further, the processing gas, which is housed in the processing vessel 20C, is discharged to the upper side of the processing vessel 20C from the first opening 21 a.

### (Effects)

Even in this embodiment, as in the first embodiment, it is possible to eliminate the processing gas, which flows out of the first opening 21a, from the vicinity of the discharge surface 10a by substituting the processing gas with a scavenging gas by using the scavenging means 40A. Accordingly, it is possible to prevent the condensation of a nonsolvent on the discharge surface 10a. Therefore, it is possible to precisely control the surface structure of a hollow porous film A to be obtained, to uniformize the surface structure of the film, and to improve the quality of the hollow porous film A.

Further, in this embodiment, it is possible to prepare a processing gas by making a nonsolvent be contained in the processing vessel 20C through not only the supply of a nonsolvent using the gas supply pipe 24 but also the evaporation of a nonsolvent of the solidification solution B.

### Fourth embodiment

A fourth embodiment of the producing device of the invention will be described.

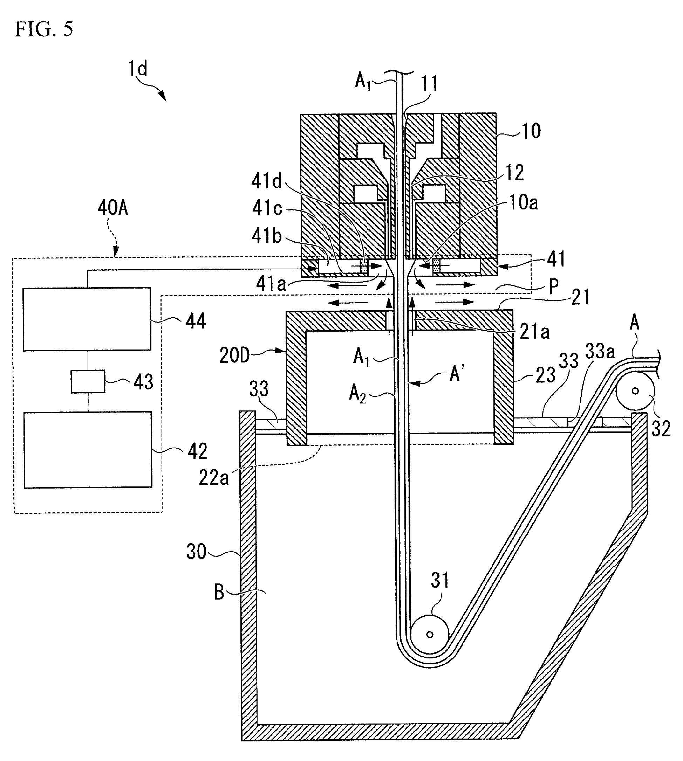

Fig. 5 illustrates a producing device of this embodiment. The producing device 1d of this embodiment includes a spinning nozzle 10, a processing vessel 20D that is disposed on the downstream side of the spinning nozzle 10, a solidification tank 30 that houses a solidification solution B, and scavenging means 40A for sending a scavenging gas to a discharge surface 10a of the spinning nozzle 10. A spinning nozzle, a solidification tank, and scavenging means, which are the same as those of the first embodiment, are used as the spinning nozzle 10, the solidification tank 30, and the scavenging means 40A of this embodiment.

The processing vessel 20D of this embodiment is the same as the processing vessel 20C of the third embodiment except that a gas supply pipe 24 is not mounted on a side portion 23.

### (Effects)

Even in this embodiment, as in the first embodiment, it is possible to eliminate the processing gas, which flows out of the first opening 21a, from the vicinity of the discharge surface 10a by substituting the processing gas with a scavenging gas by using the scavenging means 40A. Accordingly, it is possible to prevent the condensation of a nonsolvent on the discharge surface 10a.

Further, since the processing gas is prepared in the processing vessel 20D by using the evaporation of a nonsolvent of the solidification solution B in this embodiment, a structure is simplified.

### Fifth embodiment

A fifth embodiment of the producing device of the invention will be described.

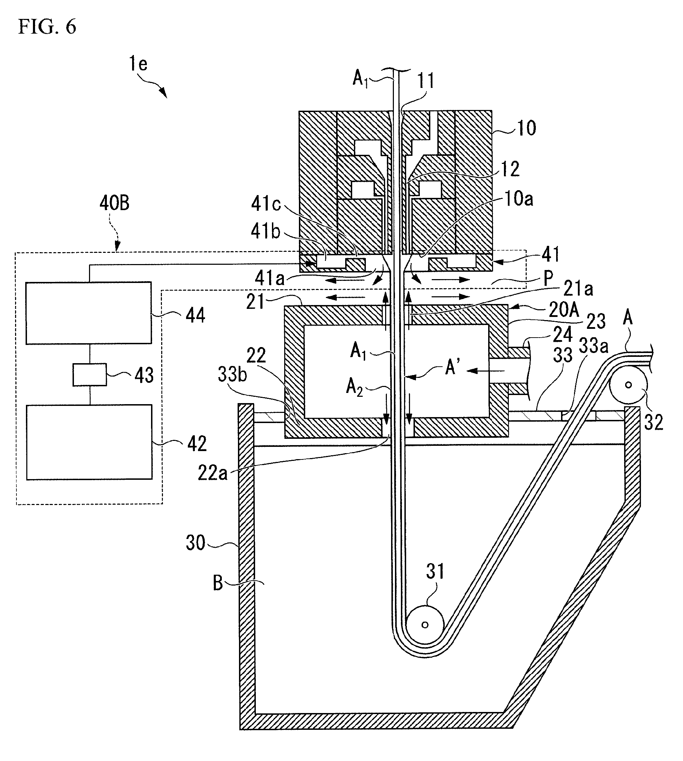

Fig. 6 illustrates a producing device of this embodiment. The producing device 1e of this embodiment includes a spinning nozzle 10, a processing vessel 20A that is disposed on the downstream side of the spinning nozzle 10, a solidification tank 30 that houses a solidification solution B, and scavenging means 40B for sending a scavenging gas to a discharge surface 10a of the spinning nozzle 10. A spinning nozzle, a processing vessel, and a solidification tank, which are the same as those of the first embodiment, are used as the spinning nozzle 10, the processing vessel 20A, and the solidification tank 30 of this embodiment.

Like the scavenging means 40A of the first embodiment, the scavenging means 40B of this embodiment includes a scavenging nozzle 41 that is provided on an upper surface 10a of the processing vessel 20A and gas supply means 42 for discharging a scavenging gas to the scavenging nozzle 41. However, in this embodiment, the length of a gas discharge port 41 c in the vertical direction is shorter than the length of a gas introduction chamber 41 b in the vertical direction. Since the scavenging nozzle 41 having this shape can apply discharge resistance, the scavenging nozzle 41 does not require a resistance applying body.

### (Effects)

In this embodiment, it is possible to eliminate the processing gas, which flows out of the first opening 21 a, from the vicinity of the discharge surface 10a by substituting the processing gas with a scavenging gas by using the scavenging means 40B. Accordingly, it is possible to prevent the condensation of a nonsolvent on the discharge surface 10a. Therefore, it is possible to precisely control the surface structure of a hollow porous film A to be obtained, to uniformize the surface structure of the film, and to improve the quality of the hollow porous film A.

### Sixth embodiment

A sixth embodiment of the producing device of the invention will be described.

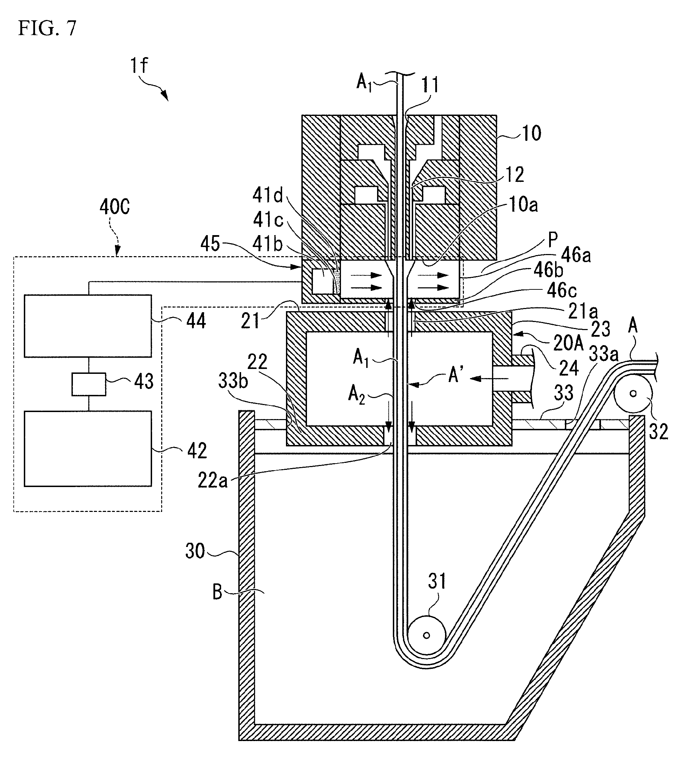

Fig. 7 illustrates a producing device of this embodiment. The producing device 1f of this embodiment includes a spinning nozzle 10, a processing vessel 20A that is disposed on the downstream side of the spinning nozzle 10, a solidification tank 30 that houses a solidification solution B, and scavenging means 40C for sending a scavenging gas to a discharge surface 10a of the spinning nozzle 10. A spinning nozzle, a processing vessel, and a solidification tank, which are the same as those of the first embodiment, are used as the spinning nozzle 10, the processing vessel 20A, and the solidification tank 30 of this embodiment.

The scavenging means 40C of this embodiment includes a scavenging nozzle 45 that is provided at a part of an end portion of the discharge surface 10a of the spinning nozzle 10, gas supply means 42 for supplying a scavenging gas to the scavenging nozzle 45, and a side-air guide plate 46a and a bottom-air guide plate 46b that guide the scavenging gas discharged from the scavenging nozzle 45 to a fiber-shaped body A'. Meanwhile, an opening 46c through which the fiber-shaped body A' passes is formed at the bottom-air guide plate 46b.

The scavenging nozzle 45 is formed of a rectangular parallelepiped member. The scavenging nozzle 45 includes a gas introduction chamber 45b that is formed of a space which is connected to the gas supply means 42 and into which a scavenging gas is introduced, and a rectangular gas discharge port 45c through which the scavenging gas supplied to the fiber-shaped body A' from the gas introduction chamber 45b is discharged. Further, a rectangular parallelepiped resistance applying body 45d, which applies discharge resistance to a scavenging gas, is provided at the gas discharge port 45c. Since the resistance applying body 45d is provided at the gas discharge port 45c, a scavenging gas is made to temporarily stay in the gas introduction chamber 45b and the pressure of the scavenging gas can be uniformized.

The side-air guide plate 46a is provided on the downstream side of the side portion of the gas discharge port 45c, and the bottom-air guide plate 46b is provided on the downstream side of the bottom portion of the gas discharge port 45c. When the scavenging nozzle 45 includes the side-air guide plate 46a and the bottom-air guide plate 46b, it is possible to suppress the dissipation of the scavenging gas. Accordingly, it is possible to improve scavenging efficiency.

In the scavenging nozzle 45, after a scavenging gas supplied from the gas supply means 42 is introduced into the gas introduction chamber 45b and the pressure of the scavenging gas is uniformized in the gas introduction chamber 45b, the scavenging gas passes through the resistance applying body 45d provided at the gas discharge port 45c and is discharged to the outside. Further, the discharged scavenging gas is guided to the fiber-shaped body A' by the side-air guide plate 46a and the bottom-air guide plate 46b, and is discharged to the outside from a gap P between the spinning nozzle 10 and the processing vessel 20A.

### (Effects)

In this embodiment, it is possible to eliminate the processing gas, which flows out of the first opening 21a, from the vicinity of the discharge surface 10a by substituting the processing gas with a scavenging gas by using the scavenging means 40C. Accordingly, it is possible to prevent the condensation of a nonsolvent on the discharge surface 10a. Therefore, it is possible to precisely control the surface structure of a hollow porous film A to be obtained, to uniformize the surface structure of the film, and to improve the quality of the hollow porous film A.

### Seventh embodiment

A seventh embodiment of the producing device of the invention will be described.

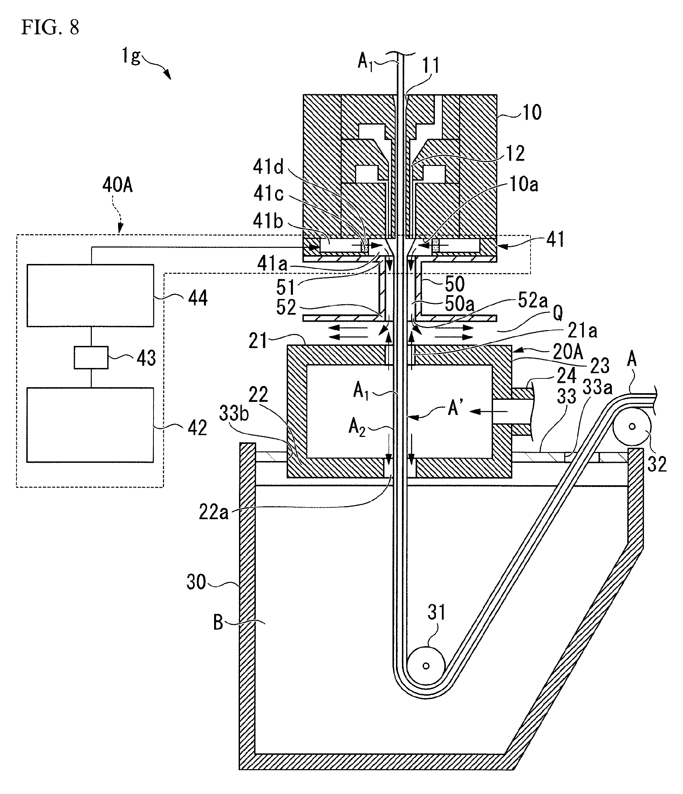

Fig. 8 illustrates a producing device of this embodiment. The producing device 1g of this embodiment includes a spinning nozzle 10, a processing vessel 20A that is disposed on the downstream side of the spinning nozzle 10, a solidification tank 30 that houses a solidification solution B, and scavenging means 40A for sending a scavenging gas to a discharge surface 10a of the spinning nozzle 10. A spinning nozzle, a processing vessel, a solidification tank, and scavenging means, which are the same as those of the first embodiment, are used as the spinning nozzle 10, the processing vessel 20A, the solidification tank 30, and the scavenging means 40A of this embodiment.

In this embodiment, a protective tube 50, which covers and protects a fiber-shaped body A', is provided on the lower surface of a scavenging nozzle 41 of the scavenging means 40A.

The protective tube 50 of this embodiment is a cylindrical member, and a through hole 50a is formed at the protective tube 50. Further, an upper end portion 51 of the protective tube 50 comes into close contact with and is fixed to the lower surface of the scavenging nozzle 41 so that the through hole 50a communicates with a circular opening 41a of the scavenging nozzle 41. Since a lower end portion 52 of the protective tube 50 is installed so as to be separated from the processing vessel 20A, a gap Q is formed between the protective tube 50 and the processing vessel 20A.

It is preferable that the area of the through hole 50a and the area of an opening 52a of the lower end portion 52 be small as long as the fiber-shaped body A' can pass through the through hole 50a and the opening 52a without coming into contact with the through hole 50a and the opening 52a. When the cross-sectional area of the through hole 50a becomes smaller, the velocity of flow of a scavenging gas can become higher even though the amount of a scavenging gas to be supplied is small. Accordingly, it is possible to improve scavenging capacity. Furthermore, when the area of the opening 52a of the lower end portion 52 becomes smaller, it is possible to further prevent a processing gas, which has flowed out of the first opening 21 a, from flowing into the through hole 50a.

However, it is preferable that the velocity of flow of a scavenging gas toward the first opening 21a from the lower end portion 52 be not unnecessarily high, and it is preferable that the area of the opening 52a of the lower end portion 52 be not unnecessarily small. When the velocity of flow of a scavenging gas toward the first opening 21 a is excessively high or the area of the opening 52a of the lower end portion 52 is excessively small, there is a concern that a scavenging gas may enter the processing vessel 20A through the first opening 21a and the temperature and humidity of a gas housed in the processing vessel 20A may fluctuate.

A material, which is not corroded by a gas flowing out of the processing vessel 20A or resists the gas, is preferable as the material of the protective tube 50. Examples of the material, which satisfies the above-mentioned conditions, polyethylene, polypropylene, a fluorine resin, stainless steel, aluminum, ceramic, and glass. Further, it is preferable that the material of the protective tube 50 have low thermal conductivity to suppress the release of heat of a scavenging gas flowing in the through hole 50a or the temperature fluctuation of a scavenging gas caused by heat received from the external atmosphere. Examples of a material having low thermal conductivity include polyethylene, polypropylene, a fluorine resin, ceramic, and glass. Furthermore, in terms of the observation of the state of the fiber-shaped body A' traveling in the through hole 50a from the outside, a material having high transparency is preferable as the material of the protective tube 50. Polyethylene having high transparency, polypropylene having high transparency, a tetrafluoroethylene-perfluoroalkyl vinyl ether copolymer resin (PFA) of a fluorine resin having high transparency, or glass is particularly preferable as the material of the protective tube 50.

It is preferable that the protective tube 50 be detachably mounted on the scavenging nozzle. Since the protective tube 50 can be detached from the scavenging nozzle 41 if the protective tube 50 is detachably mounted, a hand easily can reach the vicinity of the discharge surface 10a. Accordingly, it is possible to improve operability at the time of start of the formation of a film. Mechanical attaching/detaching means, such as screws or clamps, and magnetic force-attraction attaching/detaching means, which uses a magnet and metal attracted by the magnet, is suitable as attaching/detaching means since being simple.

Further, it is preferable that the protective tube 50 can be mounted on and detached from the scavenging nozzle 41 while the fiber-shaped body A' travels. Example of the protective tube 50, which can be mounted on and detached from the scavenging nozzle 41 while the fiber-shaped body A' travels, include a tube that can be divided into two in the axial direction thereof. The same means as the attaching/detaching means can be used as fixing means that is used to form the protective tube 50 by integrating the divided members.

In this embodiment, the fiber-shaped body A' discharged from the spinning nozzle 10 passes through the through hole 50a of the protective tube 50 after passing through the gas discharge port 41 c.

Furthermore, a scavenging gas, which is discharged from the gas discharge port 41c of the scavenging nozzle 41, flows around the fiber-shaped body A', which passes through the through hole 50a, toward the lower end portion 52 from the upper end portion 51 in parallel with the fiber-shaped body A'. Further, the scavenging gas is discharged to the processing gas, which flows out of the first opening 21 a, from the through hole 50a. After that, the scavenging gas flows to the outside through the gap Q so as to be separated from the first opening 21 a together with the processing gas that flows out of the first opening 21 a.

### (Effects)

Even in this embodiment, as in the first embodiment, it is possible to eliminate the processing gas, which flows out of the first opening 21a, from the vicinity of the discharge surface 10a by substituting the processing gas with a scavenging gas by using the scavenging means 40A. Accordingly, it is possible to prevent the condensation of a nonsolvent on the discharge surface 10a. Therefore, it is possible to precisely control the surface structure of a hollow porous film A to be obtained, to uniformize the surface structure of the film, and to improve the quality of the hollow porous film A.

Further, since the scavenging gas discharged from the scavenging nozzle 41 flows in the through hole 50a of the protective tube 50, the scavenging gas is straightened and the directivity of the scavenging gas is improved. Accordingly, since the scavenging gas flows counter to the processing gas flowing out of the first opening 21 a, it is possible to prevent the processing gas from reaching the discharge surface 10a even though the flow rate of the scavenging gas is low. As a result, it is possible to prevent condensation.

Furthermore, since the fiber-shaped body A' travels in the through hole 50a of the protective tube 50 in which the scavenging gas flows and can be introduced into the processing vessel 20A through the first opening 21 a immediately after getting out of the protective tube 50, it is possible to prevent dust or the like from adhering to the fiber-shaped body. Accordingly, it is possible to further improve the quality of the hollow porous film A to be obtained.

### Eighth embodiment

An eighth embodiment of the producing device of the invention will be described.

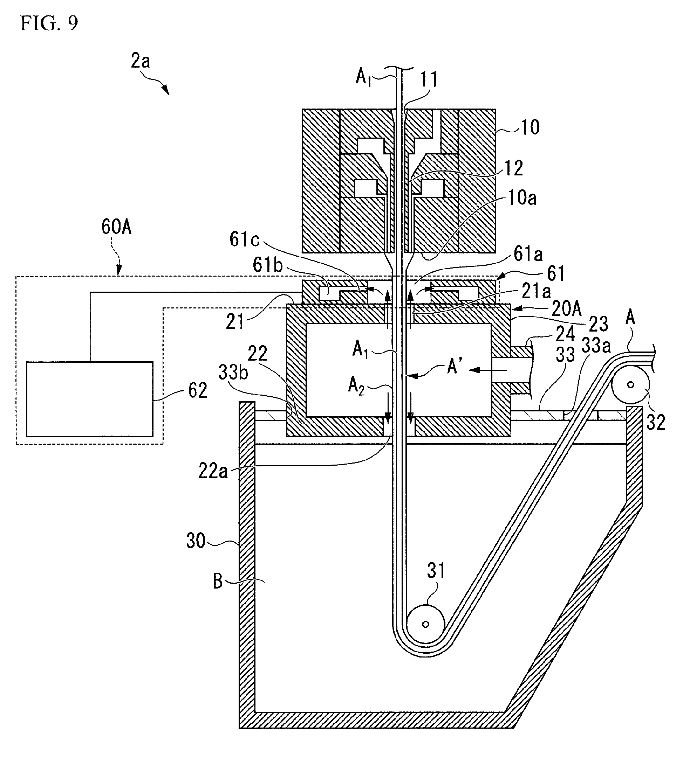

Fig. 9 illustrates a producing device of this embodiment. The producing device 2a of this embodiment includes a spinning nozzle 10, a processing vessel 20A that is disposed on the downstream side of the spinning nozzle 10, a solidification tank 30 that houses a solidification solution B, and suction means 60A for sucking a processing gas flowing out in the vicinity of the spinning nozzle 10 and discharging the processing gas. A spinning nozzle, a processing vessel, and a solidification tank, which are the same as those of the first embodiment, are used as the spinning nozzle 10, the processing vessel 20A, and the solidification tank 30 of this embodiment.

The suction means 60A of this embodiment includes a suction nozzle 61 that is provided on the upper surface of a ceiling portion 21 of the processing vessel 20A, and gas suction means 62 for sucking a gas from the suction nozzle 61. The suction nozzle 61 is disposed so as to be separated from the spinning nozzle 10.

The suction nozzle 61 is formed of an annular member. The suction nozzle 61 includes a circular opening 61a that is formed at the center thereof, a gas suction chamber 61b that is formed of an annular space which is connected to the gas suction means 62 and into which a gas is introduced, and an annular gas suction port 61 c through which the processing gas flowing out of the first opening 21 a is sucked from the circular opening 61a.

The circular opening 61 a is disposed so that the center of the circular opening 61 a corresponds to the center of a support discharge port and the center of the resin solution-discharge port. Accordingly, the fiber-shaped body A' passes through the circular opening 61 a. Further, the circular opening 61 a is disposed so that the center of the circular opening 61a corresponds to the center of the first opening 21a

The gas suction chamber 61b is formed in the shape of a circle, which is concentric with the suction nozzle 61, so as to be closer to the outer peripheral side than the circular opening 61 a.

Since the gas suction port 61c communicates with the gas suction chamber 61b and is opened toward the center of the circular opening 61 a, gas present in the circular opening 61a is uniformly sucked. Further, the length of the gas suction port 61c of this embodiment in a vertical direction is shorter than the length of the gas suction chamber 61 b in the vertical direction.

As long as means for sucking a gas is used as the gas suction means 62, the gas suction means 62 is not particularly limited. For example, fans, blowers, pumps, ejectors, and or like can be used as the gas suction means 62.

The material of the suction nozzle 61 is not limited, but a material, which is not corroded by the processing gas or resists the processing gas, is preferable as the material of the suction nozzle 61. Metal, polyethylene, polypropylene, and a fluorine resin are suitable as the material of the suction nozzle 61.

### (Effects)

In this embodiment, it is possible to eliminate the processing gas, which flows out of the first opening 21a, from the vicinity of the discharge surface 10a by sucking the processing gas together with the atmosphere, which is present around the processing gas, by using the suction means 60A. Accordingly, it is possible to prevent the processing gas from reaching the discharge surface 10a of the spinning nozzle 10. Therefore, it is possible to prevent the condensation of a nonsolvent on the discharge surface 10a. As a result, it is possible to precisely control the surface structure of a hollow porous film A to be obtained, to uniformize the surface structure of the film, and to improve the quality of the hollow porous film A.

### Ninth embodiment

A ninth embodiment of the producing device of the invention will be described.

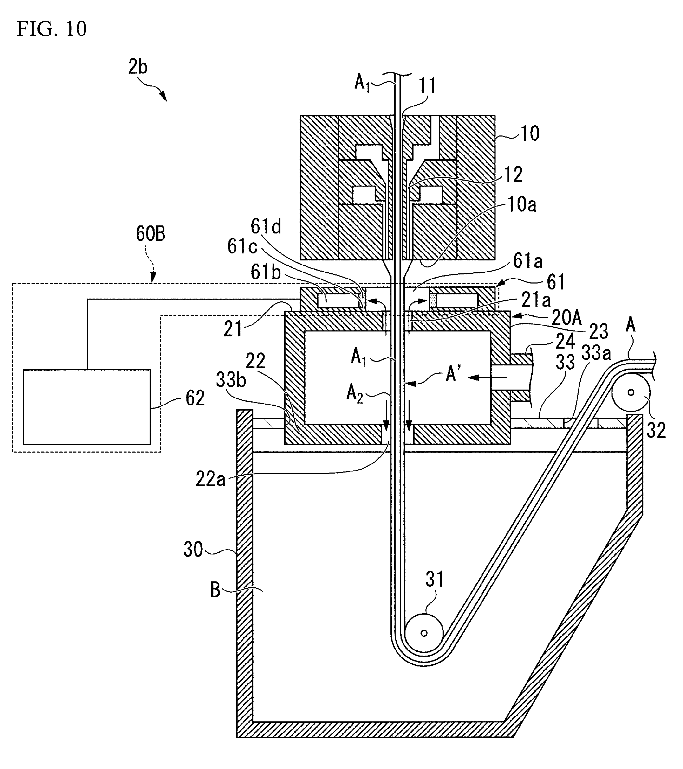

Fig. 10 illustrates a producing device of this embodiment. The producing device 2b of this embodiment includes a spinning nozzle 10, a processing vessel 20A that is disposed on the downstream side of the spinning nozzle 10, a solidification tank 30 that houses a solidification solution B, and suction means 60B for sucking a processing gas flowing out in the vicinity of the spinning nozzle 10 and discharging the processing gas. A spinning nozzle, a processing vessel, and a solidification tank, which are the same as those of the first embodiment, are used as the spinning nozzle 10, the processing vessel 20A, and the solidification tank 30 of this embodiment.

Like the suction means 60A of the eighth embodiment, the suction means 60B of this embodiment also includes a suction nozzle 61 and gas suction means 62 and the suction nozzle 61 includes a circular opening 61 a, a gas suction chamber 61b, and an annular gas suction port 61c. However, in this embodiment, the length of the gas suction port 61 c in a vertical direction is substantially equal to the length of the gas suction chamber 61b in the vertical direction and an annular resistance applying body 61 d, which applies suction resistance to a gas sucked through the gas suction port 61c, is provided at the gas suction port 61 c.

The resistance applying body 61d serves as a suction resistor while the scavenging gas passes through the resistance applying body 61d. For example, a mesh, a continuous foam body, a porous body, or the like is used as the resistance applying body 61 d.

When the resistance applying body 61d is provided at the gas suction port 61c and a gas suction pressure loss, which is several to several ten times larger than the pressure loss of a gas flowing in the annular flow channel formed in the gas suction chamber 61b, is taken, pressure irregularity acting on the gas suction port 61 c is reduced. For this reason, it is possible to reduce irregularity in the amount of a gas to be sucked in the suction surface of the gas suction port 61 c.

### (Effects)

In this embodiment, it is possible to eliminate the processing gas, which flows out of the first opening 21 a, from the vicinity of the discharge surface 10a by sucking the processing gas together with the atmosphere, which is present around the processing gas, by using the suction means 60B. Accordingly, it is possible to prevent the condensation of a nonsolvent on the discharge surface 10a. Therefore, it is possible to precisely control the surface structure of a hollow porous film A to be obtained, to uniformize the surface structure of the film, and to improve the quality of the hollow porous film A.

In addition, since the resistance applying body 61 d is provided at the gas suction port 61 c in this embodiment, irregularity in the amount of a gas to be sucked in the suction surface of the gas suction port 61c is reduced. Accordingly, it is possible to more stably suck a gas and to further prevent condensation.

### Tenth embodiment

A tenth embodiment of the producing device of the invention will be described.

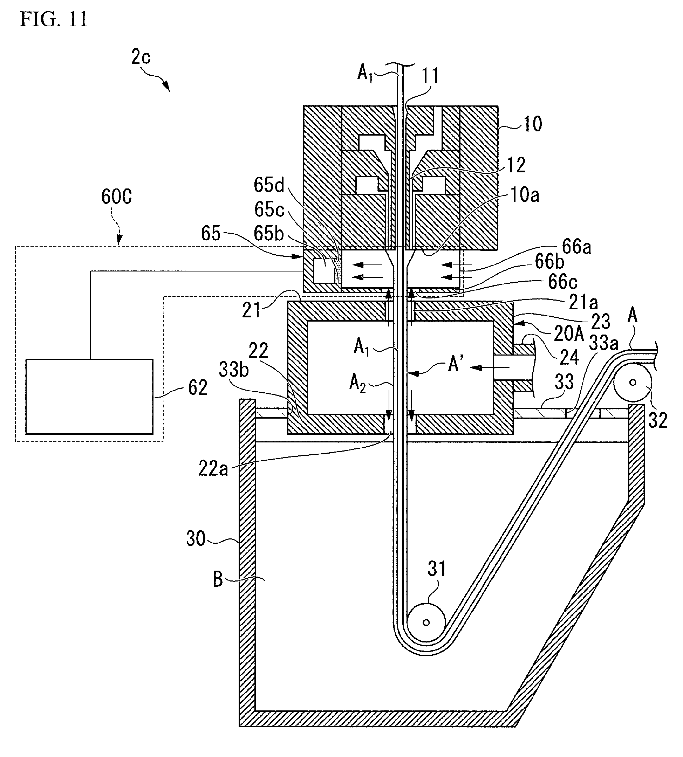

Fig. 11 illustrates a producing device of this embodiment. The producing device 2c of this embodiment includes a spinning nozzle 10, a processing vessel 20A that is disposed on the downstream side of the spinning nozzle 10, a solidification tank 30 that houses a solidification solution B, and suction means 60C for sucking a processing gas flowing out in the vicinity of the spinning nozzle 10 and discharging the processing gas. A spinning nozzle, a processing vessel, and a solidification tank, which are the same as those of the first embodiment, are used as the spinning nozzle 10, the processing vessel 20A, and the solidification tank 30 of this embodiment.

The suction means 60C of this embodiment includes a suction nozzle 65 that is provided at a part of an end portion of a discharge surface 10a of the spinning nozzle 10, gas suction means 62 for sucking a gas from the suction nozzle 65, and a side-air guide plate 66a and a bottom-air guide plate 66b that guide a gas present in the vicinity of the discharge surface 10a to the suction nozzle 65. Meanwhile, an opening 66c through which a fiber-shaped body A' passes is formed at the bottom-air guide plate 66b.

The suction nozzle 65 is formed of a rectangular parallelepiped member. The suction nozzle 65 includes a gas suction chamber 65b that is formed of a space which is connected to the gas suction means 62 and into which a gas is introduced, and a rectangular gas suction port 65c through which a gas is sucked into the gas suction chamber 65b from the vicinity of the discharge surface 10a. Further, a rectangular parallelepiped resistance applying body 65d, which applies suction resistance to a gas, is provided at the gas suction port 65c.

The side-air guide plate 66a is provided on the upstream side of the side portion of the gas suction port 65c, and the bottom-air guide plate 66b is provided on the upstream side of the bottom portion of the gas suction port 65c. When the suction nozzle 65 includes the side-air guide plate 66a and the bottom-air guide plate 66b, it is possible to prevent the inflow of a gas except for the processing gas that flows out of the first opening 21a. Accordingly, it is possible to improve suction efficiency.

The suction nozzle 65 sucks a gas, which is present in the vicinity of the discharge surface 10a, into the gas suction port 65c by sucking a gas from the gas suction chamber 65b by using the gas suction means 62.

### (Effects)

In this embodiment, it is possible to eliminate the processing gas, which flows out of the first opening 21 a, from the vicinity of the discharge surface 10a by sucking the processing gas together with the atmosphere, which is present around the processing gas, by using the suction means 60C. Accordingly, it is possible to prevent the condensation of a nonsolvent on the discharge surface 10a. Therefore, it is possible to precisely control the surface structure of a hollow porous film A to be obtained, to uniformize the surface structure of the film, and to improve the quality of the hollow porous film A.

### Eleventh embodiment

An eleventh embodiment of the producing device of the invention will be described.

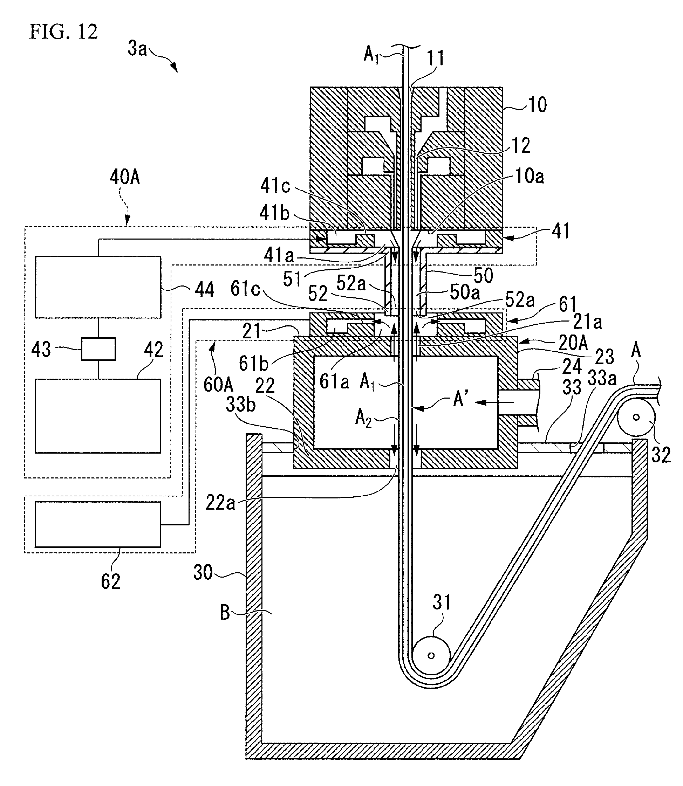

Fig. 12 illustrates a producing device of this embodiment. The producing device 3a of this embodiment includes a spinning nozzle 10, a processing vessel 20A that is disposed on the downstream side of the spinning nozzle 10, a solidification tank 30 that houses a solidification solution B, scavenging means 40A for sending a scavenging gas to a discharge surface 10a of the spinning nozzle 10, and suction means 60A for sucking a processing gas flowing out on the processing vessel 20A and discharging the processing gas. A spinning nozzle, a solidification tank, and scavenging means, which are the same as those of the first embodiment, are used as the spinning nozzle 10, the solidification tank 30, and the scavenging means 40A of this embodiment, and suction means, which is the same as that of the eighth embodiment, is used as the suction means 60A.

In the producing device 3a of this embodiment, a scavenging nozzle 41 comes into close contact with and is fixed to the lower surface of the discharge surface 10a of the spinning nozzle 10. A protective tube 50 comes into contact with and is fixed to the lower surface of the scavenging nozzle 41 so that a through hole 50a of the protective tube 50 communicates with a circular opening 41a of the scavenging nozzle 41.

Further, a lower end of the protective tube 50 is inserted into a circular opening 61 a of a suction nozzle 61. However, the lower end of the protective tube 50 is disposed without coming into contact with the processing vessel 20A so that a gap is formed between the lower end of the protective tube 50 and the processing vessel 20A.

The suction nozzle 61 of the suction means 60 sucks at least the processing gas that flows out of the first opening 21 a of the processing vessel 20A and the scavenging gas that is discharged from an opening 52a of the protective tube 50.

In this embodiment, a fiber-shaped body A' discharged from the spinning nozzle 10 passes through the through hole 50a of the protective tube 50 after passing through a gas discharge port 41 c.

Furthermore, a scavenging gas, which is discharged from the gas discharge port 41c of the scavenging nozzle 41, flows around the fiber-shaped body A', which passes through the through hole 50a, toward a lower end portion 52 from an upper end portion 51 in parallel with the fiber-shaped body A'. Further, the scavenging gas is discharged to the processing gas, which flows out of the first opening 21a, from the through hole 50a. After that, the scavenging gas flows to the outside through the circular opening 61 a so as to be separated from the first opening 21 a together with the processing gas, which flows out of the first opening 21 a, and is sucked from an annular gas suction port 61c of the suction nozzle 61 together with the processing gas.

### (Effects)

Even in this embodiment, as in the first embodiment, it is possible to eliminate the processing gas, which flows out of the first opening 21a, from the vicinity of the discharge surface 10a by substituting the processing gas with a scavenging gas by using the scavenging means 40A. Accordingly, it is possible to prevent the condensation of a nonsolvent on the discharge surface 10a. Therefore, it is possible to precisely control the surface structure of a hollow porous film A to be obtained, to uniformize the surface structure of the film, and to improve the quality of the hollow porous film A.

Furthermore, since it is possible to prevent the adherence of dust or the like to the fiber-shaped body A' and the condensation of a nonsolvent on the discharge surface 10a at a low flow rate of the scavenging gas by an effect of straightening and protecting the scavenging gas in the protective tube 50, it is possible to further improve the quality of a hollow porous film A to be obtained.

In addition, since a processing gas and a scavenging gas are sucked by the suction means 60A, scavenging efficiency is improved. Accordingly, the flow rate of a scavenging gas and the amount of a gas to be sucked, which are required to obtain the same effect, are reduced in comparison with a case in which a processing gas or a scavenging gas is used alone. In addition, it is possible to prevent the environmental temperature or humidity around the producing device from being changed by the scavenging gas containing the processing gas and to prevent a nonsolvent of the scavenging gas from being condensed around the producing device.

### Other embodiments

Meanwhile, the invention is not limited to the above-mentioned embodiments.

As long as a solidification tank allows the coating film A₂ of the film-forming resin solution to come into contact with the solidification solution B, the solidification tank is not limited to the solidification tanks described in the above-mentioned embodiments. A pipeline through which a solidification solution B flows and a water column in which a solidification solution B flows down along the surface of a film-forming resin solution may be used instead of the solidification tank.

Further, if the resistance applying body 41 d provided in the scavenging nozzle 41 can filter a scavenging gas in the first embodiment, gas filtering means is not separately provided and the resistance applying body may be used as gas filtering means.

Even in the fifth and sixth embodiments, as in the seventh embodiment, a protective tube may be provided on the lower surface of the scavenging nozzle 41.

Furthermore, scavenging means may be provided so as to be capable of introducing a scavenging gas into the through hole of the protective tube of the seventh embodiment and leading a scavenging gas out of the through hole. In this case, the protective tube forms a part of the scavenging means and can be directly mounted on the spinning nozzle or a member that holds the spinning nozzle. Even though the protective tube is a part of the scavenging means, it is possible to prevent the processing gas, which flows out of the first opening, from reaching the discharge surface of the spinning nozzle by the scavenging gas that is discharged into the through hole of the protective tube.

### Examples

The invention will be described in detail using the following examples.

### <Example 1>

### (Hollow fiber-shaped support)

Five polyester fibers (fineness: 84 dtex, the number of filaments: 36) were bundled into one, and then were formed into a hollow knitted cord by being circularly knitted by a circular knitting machine. Continuous drawing-heat treatment was performed on the hollow knitted cord by a heating die having a temperature of 200°C so that the hollow knitted cord has low elasticity and a stable outer diameter. As a result, a hollow fiber-shaped support having an outer diameter of 2.5 mm and an inner diameter of 1.5 mm was obtained.

### (Film-forming resin solution)

Polyvinylidene fluoride A (manufactured by Atofina Japan K.K., trade name: KYNAR 301F), polyvinylidene fluoride B (manufactured by Atofina Japan K.K., trade name: KYNAR 9000LD), polyvinylpyrrolidone (manufactured by ISP Co., Ltd., trade name: K-90), and N,N-dimethylacetamide were mixed so as to have mass ratios illustrated in Table 1, and were stirred and dissolved at a temperature of 60°C. As a result, a film-forming resin solution 1 and a film-forming resin solution 2 were prepared.

**[Table 1]**

| Composition (mass%) | Film-forming resin solution 1 | Film-forming resin solution 2 |
|---|---|---|
| Polyvinylidene fluoride A | 12 | 19 |
| Polyvinylidene fluoride B | 12 | - |
| Polyvinylpyrrolidone | 11 | 10 |
| N,N-dimethylacetamide | 65 | 71 |

### (Spinning nozzle)

A spinning nozzle, which includes a support-through hole through which a hollow string-like support illustrated in Fig. 1 passes and resin solution-flow channels for the film-forming resin solutions 1 and 2, was used as a spinning nozzle. An introduction hole for the hollow string-like support is formed at the upper surface of the spinning nozzle, and a lead hole for the hollow string-like support is formed at the lower surface of the spinning nozzle. An annular resin solution-discharge port is formed so as to be closer to the outer peripheral side than the lead hole for the hollow string-like support.

This spinning nozzle is compositely formed in the shape of a concentric circle so that the film-forming resin solution 1 corresponds to the inner periphery and the film-forming resin solution 2 corresponds to the outer periphery on the downstream of the resin solution-discharge port.

### (Gas elimination means)

Scavenging means, which includes a scavenging nozzle 1 illustrated in Table 2, was used as gas elimination means. After factory-dry air was filtered by a filter having a filtering accuracy of 0.1 µm, temperature-adjusted air having a temperature of 32°C and a relative humidity lower than 1% was generated by a heat exchanger. The temperature-adjusted air was supplied to the scavenging nozzle 1 of the scavenging means through a flow rate adjusting valve and a gas flowmeter.

### (Supply of processing gas)

A gas 1 was obtained by the filtration of factory-compressed air that was performed using a filter having a filtering accuracy of 0.1 µm. A gas 2 was obtained by the filtration of water vapor obtained from the boiling of water that was performed using a sintered metal filter having a filtering accuracy of 1 µm and made of stainless steel. The gas 1 and the gas 2 were adjusted and mixed, so that saturated air having a temperature of 74°C was obtained. After the saturated air passed through a mist separator and drainage and mist were eliminated from the saturated air, the temperature of the saturated air was raised to 80°C by a heat exchanger. As a result, temperature-humidity-adjusted air having a temperature 80°C and a relative humidity of about 80% was obtained. After passing through a flow rate adjusting valve and a gas flowmeter, the temperature-humidity-adjusted air was supplied to the processing vessel as a processing gas.

### (Solidification tank)

A solidification tank, which is illustrated in Fig. 1 and includes a storage tank in which a solidification solution having constant composition and constant temperature flows, was used as a solidification tank. A first guide roller, which changes the traveling direction of a hollow porous film passing through the processing vessel and solidified by the solidification solution, was disposed below the level of the solidification solution in the storage tank. The hollow porous film having passed by the first guide roller was pulled up from the solidification solution by a second guide roller, and was led to the outside of the solidification tank. A top plate, which suppresses the evaporation of the solidification solution present in the storage tank, was provided at the upper portion of the storage tank. The top plate had a structure that allows the hollow porous film to be led to the outside of the storage tank by the second guide roller.

### (Production of hollow porous film)

A processing vessel 1 having a structure illustrated in Table 3 was disposed above the solidification tank so that a gap of 5 mm was formed between the level of the solidification solution and the processing vessel. A scavenging nozzle 1, which is illustrated in Fig. 2 and Table 2 and discharges a scavenging gas from a gas discharge port from an annular resistor, was disposed above the processing vessel 1 so that a gap of 10 mm was formed between a first opening of the processing vessel 1 and the scavenging nozzle. The scavenging nozzle 1 was disposed so that the upper surface of the scavenging nozzle 1 came into close contact with the lower surface of the spinning nozzle.

Temperature-adjusted air, which has a relative humidity lower than 1% at a temperature of 32°C, was supplied to the scavenging nozzle 1 at a flow rate of 6 L/min. Temperature-humidity-adjusted air, which has a relative humidity of about 80% at a temperature of 80°C, was supplied to the processing vessel 1 at a flow rate of 3 LN/min as the processing gas.

The solidification tank was filled with a solidification solution having a composition containing 5 mass% of N,N-dimethylacetamide as a solvent component and 95 mass% of pure water as a nonsolvent component. The solidification tank was kept warm at a temperature of 75°C.

The film-forming resin solution 1 having a temperature of 32°C was supplied to the spinning nozzle at a flow rate of 20 cm³/min, and the film-forming resin solution 2 having a temperature of 32°C was supplied to the spinning nozzle at a flow rate of 23.2 cm³/min. After that, the film-forming resin solution 1 and the film-forming resin solution 2 were discharged from the resin solution-discharge port in a concentrically circular shape, and the film-forming resin solutions 1 and 2 were applied to the outer peripheral surface of a hollow knitted cord support to be drawn from the support discharge port at a speed of 20 m/min. Accordingly, a fiber-shaped body A' where the film-forming resin solutions was applied to the hollow knitted cord support was obtained. The fiber-shaped body A' passed through the scavenging nozzle, the processing vessel, and the solidification solution in this order, and was pulled up from the solidification tank after the traveling direction of the fiber-shaped body A' was changed at the first guide roller positioned in the solidification solution. Then, after passing by the second guide roller, the fiber-shaped body was taken off by a take-off device. As a result, a hollow porous film was obtained.

**[Table 2]**

| | Scavenging nozzle 1 | Scavenging nozzle 2 | Scavenging nozzle 3 |
|---|---|---|---|
| Outer shape | Annular shape | Annular shape | Rectangular parallelepiped shape |
| Outer dimensions (mm) of nozzle | φ60 x 20 height | φ60 x 20 height | 15 width x 30 height x 15 depth |
| Dimensions (mm) of gas discharge portion | φ30 x 15 height | φ30 x 0.1 height | 13 width x 27 height |
| Length (mm) of air guide plate | - | - | 40 |
| Resistor | Cylindrical porous body | - | Plate-like porous body |
| Diameter (mm) of opening | 30 | 30 | 10 |
| Length (mm) of air guide plate | - | - | 40 |
| Diameter (mm) of opening of lower air guide plate | - | - | 10 |
| Width (mm) of ring-shaped slit | - | 3 | - |
| Material | SUS430 | SUS430 | SUS304 |

**[Table 3]**

| | Processing vessel 1 | Processing vessel 2 | Processing vessel 3 | Processing vessel 4 | Processing vessel 5 |
|---|---|---|---|---|---|
| Outer shape | Cylindrical shape | Cylindrical shape | Cylindrical shape | Cylindrical shape | Cylindrica 1 shape |
| Inner diameter (mm) of vessel | 50 | 50 | 100 | 100 | 50 |
| Inner height (mm) of vessel | 40 | 40 | 100 | 100 | 40 |
| Diameter (mm) of first opening | 10 | 10 | 10 | 10 | 6 |
| Diameter (mm) of second opening | 10 | 10 | 100 | 100 | 10 |
| Length (mm) of first opening | 15 | 15 | 15 | 15 | 5 |
| Length (mm) of second opening | 15 | 25 | (100) | (00) | 2 |
| Supply of processing gas | Gas supply pipe | Gas supply pipe | Gas supply pipe | Level of solidification solution | Gas supply pipe |
| Material | SUS304 | SUS304 | SUS304 | SUS304 | SUS304 |

### <Example 2>

A hollow fiber-shaped support, a film-forming resin solution, a spinning nozzle, gas elimination means, and a solidification tank, which are the same as those of Example 1, were used.

### (Production of hollow porous film)

The producing device, which was illustrated in Fig. 3 and included the processing vessel 2 illustrated in Table 3, was used. The processing vessel 2 was disposed so that the lower surface of the processing vessel 2 was separated from the solidification solution and an end of a pipe portion was closed by the solidification solution. Saturated air, which has a temperature of 80°C and a relative humidity of 100%, was supplied to the processing vessel 2 at a flow rate of 1.5 NL/min as a processing gas. A hollow porous film was obtained in the same manner as Example 1 except for those.

The processing gas was supplied to the processing vessel 2 as described below.

A gas 1 was obtained by the filtration of factory-compressed air that was performed using a filter having a filtering accuracy of 0.1 µm. A gas 2 was obtained by the filtration of water vapor obtained from the boiling of water that was performed using a sintered metal filter having a filtering accuracy of 1 µm and made of stainless steel. The gas 1 and the gas 2 were adjusted and mixed, so that saturated air having a temperature of 80°C was obtained. After the saturated air passed through a mist separator and drainage and mist were eliminated from the saturated air, the saturated air was supplied to the processing vessel 2 through a flow rate adjusting valve and a gas flowmeter.

### <Example 3>

A hollow fiber-shaped support, a film-forming resin solution, a spinning nozzle, gas elimination means, and a solidification tank, which are the same as those of Example 1, were used.

### (Production of hollow porous film)

The producing device, which was illustrated in Fig. 4 and included the processing vessel 3 illustrated in Table 3, was used. The processing vessel 3 was disposed so that the second opening formed at the lower portion of the processing vessel 3 was closed by the solidification solution. Saturated air, which has a temperature of 75°C and a relative humidity of 100%, was supplied to the processing vessel 3 at a flow rate of 1.5 NL/min as a processing gas. A hollow porous film was obtained in the same manner as Example 1 except for those.

The processing gas was supplied to the processing vessel 3 as described below.

A gas 1 was obtained by the filtration of factory-compressed air that was performed using a filter having a filtering accuracy of 0.1 µm. A gas 2 was obtained by the filtration of water vapor obtained from the boiling of water that was performed using a sintered metal filter having a filtering accuracy of 1 µm and made of stainless steel. The gas 1 and the gas 2 were adjusted and mixed, so that saturated air having a temperature of 75°C was obtained. After the saturated air passed through a mist separator and drainage and mist were eliminated from the saturated air, the saturated air was supplied to the processing vessel 3 through a flow rate adjusting valve and a gas flowmeter.

### <Example 4>

A hollow fiber-shaped support, a film-forming resin solution, a spinning nozzle, gas elimination means, and a solidification tank, which are the same as those of Example 1, were used.

### (Production of hollow porous film)

The producing device, which was illustrated in Fig. 5 and included the processing vessel 4 illustrated in Table 3 and not including a gas supply pipe, was used. The processing vessel 4 was disposed so that the second opening formed at the lower portion of the processing vessel 4 was closed by the solidification solution. A processing gas was not supplied to the processing vessel 4. A hollow porous film was obtained in the same manner as Example 1 except for those.

### <Example 5>

A hollow fiber-shaped support, a film-forming resin solution, a spinning nozzle, a processing vessel, and a solidification tank, which are the same as those of Example 1, were used.

### (Production of hollow porous film)

The producing device, which was illustrated in Fig. 6 and included the processing vessel 1 and the scavenging nozzle 2 illustrated in Table 2 and discharging a scavenging gas from a gas discharge port having the shape of a narrow annular slit, was used. Saturated air, which has a temperature of 80°C and a relative humidity of 100%, was supplied to the processing vessel 1 at a flow rate of 3 NL/min as a processing gas. A hollow porous film was obtained in the same manner as Example 1 except for those.

The processing gas was supplied to the processing vessel 1 as described below.

A gas 1 was obtained by the filtration of factory-compressed air that was performed using a filter having a filtering accuracy of 0.1 µm. A gas 2 was obtained by the filtration of water vapor obtained from the boiling of water that was performed using a sintered metal filter having a filtering accuracy of I µm and made of stainless steel. The gas 1 and the gas 2 were adjusted and mixed, so that saturated air having a temperature of 80°C was obtained. After the saturated air passed through a mist separator and drainage and mist were eliminated from the saturated air, the saturated air was supplied to the processing vessel 1 through a flow rate adjusting valve and a gas flowmeter.

### <Example 6>

A hollow fiber-shaped support, a film-forming resin solution, a spinning nozzle, a processing vessel, and a solidification tank, which are the same as those of Example 5, were used.

### (Production of hollow porous film)

The producing device, which was illustrated in Fig. 7 and included the processing vessel 1 and the scavenging nozzle 3 illustrated in Table 2 and scavenging a scavenging gas to a fiber-shaped body A' from a gas discharge port of a planar resistor in a direction orthogonal to the fiber-shaped body A', was used. The scavenging nozzle 3 was disposed so as to come into close contact with the lower surface of the spinning nozzle, and the scavenging nozzle 3 and the processing vessel 1 were disposed so that a gap of 10 mm was formed between the scavenging nozzle 3 and the processing vessel 1. Dry air, which has a temperature of 32°C and a relative humidity lower than 1%, was supplied to the scavenging nozzle 3 at a flow rate of 20 L/min. A hollow porous film was obtained in the same manner as Example 5 except for those.

### <Example 7>

A hollow fiber-shaped support, a film-forming resin solution, a spinning nozzle, and a solidification tank, which are the same as those of Example 1, were used.

### (Gas elimination means)

Scavenging means, which includes the scavenging nozzle 2 illustrated in Table 2, was used as gas elimination means. After factory-dry air was filtered by a filter having a filtering accuracy of 0.1 µm, temperature-adjusted air having a temperature of 32°C and a relative humidity lower than 1% was generated by a heat exchanger and was supplied to the scavenging nozzle 2 of the scavenging means through a flow rate adjusting valve and a gas flowmeter.

### (Production of hollow porous film)

The producing device, which was illustrated in Fig. 8 and included the processing vessel 5 illustrated in Table 3 and a protective tube illustrated in Table 4, was used. The processing vessel 5 and the protective tube were disposed so that a gap of 5 mm was formed between an opening formed at the lower end of the protective tube and a first opening of the processing vessel 5.

Water vapor as a processing gas was supplied to the processing vessel 5. The amount of water vapor to be supplied was adjusted to a lower limit of a flow rate, at which the temperature of a thermocouple is stable within ±1°C at a temperature of 100°C for 10 minutes or more, by gradually opening the flow rate adjusting valve while the temperature of the thermocouple inserted into the processing vessel from the first opening by 5 mm and having a diameter of 0.5 mm was monitored when a scavenging gas was supplied to the scavenging nozzle at a flow rate of 6 NL/min. When the amount of water vapor to be supplied was adjusted as described above, the water vapor to be discharged from the flow rate adjusting valve was liquefied by cooling and the mass of drainage water obtained per unit time was measured and was converted into the volume of water vapor having a temperature of 100°C. The result of the conversion corresponded to about 5 NL/min.

The film-forming resin solution 1 having a temperature of 32°C was supplied to the spinning nozzle at a flow rate of 50 cm³/min, and the film-forming resin solution 2 having a temperature of 32°C was supplied to the spinning nozzle at a flow rate of 58 cm³/min. After that, the film-forming resin solution 1 and the film-forming resin solution 2 were discharged from the resin solution-discharge port in a concentrically circular shape, and the film-forming resin solutions 1 and 2 were applied to the outer peripheral surface of a hollow knitted cord support to be drawn from the support discharge port at a speed of 50 m/min. A hollow porous film was obtained in the same manner as Example 1 except for those.

**[Table 4]**

| | Protective tube |
|---|---|
| Diameter (mm) of flange | 60 |
| Thickness (mm) of flange | 10 |
| Diameter (mm) of protective tube | 24 |
| Length (mm) of protective tube | 85 |
| Diameter (mm) of through hole | 12 |
| Diameter (mm) of lower end of protective tube | 20 |
| Material | Polypropylene |

### <Example 8>

A hollow fiber-shaped support, a film-forming resin solution, a spinning nozzle, a processing vessel, and a solidification tank, which are the same as those of Example 1, were used.

### (Gas elimination means)

Suction means, which includes a suction nozzle 1, was used as gas elimination means. A suction port of a suction blower was connected to the suction nozzle, and a gas was sucked from the suction nozzle by the suction blower. A gas flowmeter and suction-amount adjusting means were mounted between the suction nozzle and the suction blower.

### (Production of hollow porous film)

The producing device, which was illustrated in Fig. 9 and included the processing vessel 1 and a suction nozzle 1 illustrated in Table 5 and sucking a gas from a gas suction port having the shape of a narrow annular slit, was used. The suction nozzle 1 was mounted so as to come into close contact with the upper surface of the processing vessel 1. The suction nozzle 1 and the spinning nozzle were disposed so that a gap of 10 mm was formed between the upper surface of the suction nozzle 1 and the lower surface of the spinning nozzle. The amount of a gas to be sucked by the suction nozzle 1 was adjusted to 10 NL/min, and the atmosphere present in the vicinity of the spinning nozzle was sucked together with the processing gas flowing out of the first opening of the processing vessel 1. A hollow porous film was obtained in the same manner as Example 6 except for those.

**[Table 5]**

| | Suction nozzle 1 | Suction nozzle 2 | Suction nozzle 3 |
|---|---|---|---|
| Outer shape | Annular shape | Annular shape | Rectangular parallelepiped shape |
| Outer dimensions (mm) of nozzle | φ60 × 25 height | φ60 × 25 height | 15 width × 30 height × 15 depth |
| Dimensions (mm) of gas discharge portion | φ30 × 15 height | φ30 × 0.5 height | 13 width × 27 height |
| Length (mm) of air guide plate | - | - | 40 |
| Resistor | Slit | Cylindrical porous body | Plate-like porous body |
| Diameter (mm) of upper opening | 10 | 10 | - |
| Diameter (mm) of lower opening | 12 | 12 | - |
| Length (mm) of air guide plate | - | - | 40 |
| Diameter (mm) of opening of lower air guide plate | - | - | 10 |
| Width (mm) of ring-shaped slit | - | 2 | - |
| Material | SUS304 | SUS304 | SUS304 |

### <Example 9>

A hollow fiber-shaped support, a film-forming resin solution, a spinning nozzle, and a solidification tank, which are the same as those of Example 8, were used.

### (Processing gas supply means)

### (Production of hollow porous film)

The producing device, which was illustrated in Fig. 10 and included the processing vessel 5 and the suction nozzle 2 illustrated in Table 5 and sucking a gas from a gas suction port of an annular resistor, was used. As a processing gas, water vapor obtained from the boiling of water was filtered by a sintered metal filter that has a filtering accuracy of 1 µm and is made of stainless steel, and saturated water vapor was supplied to the processing vessel 5 through a reducing valve, a mist separator, and a flow rate adjusting valve at a flow rate corresponding to 5 NL/min. A hollow porous film was obtained in the same manner as Example 8 except for those.

### <Example 10>

A hollow fiber-shaped support, a film-forming resin solution, a spinning nozzle, a processing vessel, and a solidification tank, which are the same as those of Example 8, were used.

### (Production of hollow porous film)

The producing device, which was illustrated in Fig. 11 and included the suction nozzle 3 illustrated in Table 5 and sucking a gas from a gas suction port of a planar resistor in a direction orthogonal to the fiber-shaped body A', was used. The suction nozzle 3 was mounted so as to come into close contact with the lower surface of the spinning nozzle. The suction nozzle 3 and the processing vessel 5 were disposed so that a gap of 10 mm was formed between the lower surface of the suction nozzle 3 and the upper surface of the processing vessel 5. The amount of a gas to be sucked by the suction nozzle 3 was adjusted to 20 NL/min, and the atmosphere present in the vicinity of the spinning nozzle was sucked together with the processing gas flowing out of the first opening of the processing vessel 5. A hollow porous film was obtained in the same manner as Example 9 except for those.

### <Example 11>

A hollow fiber-shaped support, a film-forming resin solution, a spinning nozzle, a processing vessel, and a solidification tank, which are the same as those of Example 7, were used.

### (Gas elimination means and)

Scavenging means including the scavenging nozzle 2 and suction means including the suction nozzle 2 were used together as gas elimination means. The scavenging nozzle 2 was mounted on the lower surface of the spinning nozzle, and the suction nozzle 2 was mounted on the upper surface of the processing vessel 5.

In the scavenging means, after factory-dry air was filtered by a filter having a filtering accuracy of 0.1 µm, temperature-adjusted air having a temperature of 32°C and a relative humidity lower than 1% was generated by a heat exchanger and was supplied to the scavenging nozzle through a flow rate adjusting valve and a gas flowmeter. In the suction means, a suction port of a suction blower was connected to the suction nozzle 2, a gas flowmeter and suction-amount adjusting means were disposed between the suction blower and the suction nozzle, and a gas was sucked from the suction nozzle.

### (Production of hollow porous film)

The producing device, which was illustrated in Fig. 12 and included the scavenging nozzle 2 illustrated in Table 2, the protective tube illustrated in Table 4, and the suction nozzle 2 illustrated in Table 5, was used. An end portion of the protective tube was inserted into the circular opening of the suction nozzle 2 by a depth of 10 mm. The lower end of the protective tube and the upper surface of the processing vessel 5 are separated from each other by a gap of 15 mm, and the suction nozzle 2 and the processing vessel 5 were disposed so that a constant gap was formed between the outer wall surface of the lower end of the protective tube and the inner wall surface of an opening of the suction nozzle.

Temperature-adjusted air, which has a relative humidity lower than 1% at a temperature of 32°C, was supplied to the scavenging nozzle 2 at a flow rate of 4 NL/min as a scavenging gas, and a gas was sucked from the suction nozzle 2 at a flow rate of 6 NL/min.

Water vapor as a processing gas was supplied to the processing vessel 5. The amount of water vapor to be supplied was adjusted to a lower limit of a flow rate, at which the temperature of a thermocouple is stable within ±1°C at a temperature of 100°C for 10 minutes or more, by gradually opening the flow rate adjusting valve while the temperature of the thermocouple inserted into the processing vessel from the first opening by 5 mm and having a diameter of 0.5 mm was monitored when a scavenging gas was supplied to the scavenging nozzle at a flow rate of 4 NL/min and a gas was sucked from the suction nozzle at a flow rate of 5 NL/min. When the amount of water vapor to be supplied was adjusted as described above, the water vapor to be discharged from the flow rate adjusting valve was liquefied by cooling and the mass of drainage water obtained per unit time was measured and was converted into the volume of water vapor having a temperature of 100°C. The result of the conversion corresponded to about 4 NL/min. A hollow porous film was obtained in the same manner as Example 7 except for those.

Even in any one of Examples 1 to 11, the refinement behavior of a film-forming resin solution and a state in which a film-forming resin solution was applied to a hollow knitted cord support were stable. Accordingly, even when two or more hours had passed without change, the state was not changed. The surface shape of a hollow porous film to be obtained and the structure of a fine hole of the surface of the film were uniform in a circumferential direction and a longitudinal direction.

### <Comparative Example 1>

A hollow fiber-shaped support, a film-forming resin solution, a spinning nozzle, gas elimination means, a processing vessel, and a solidification tank, which are the same as those of Example 7, were used.

### (Production of hollow porous film)

A hollow porous film was produced in the same manner as Example 1 except that the supply of a scavenging gas to the scavenging nozzle stopped on the way.

### <Comparative Example 2>

A hollow fiber-shaped support, a film-forming resin solution, a spinning nozzle, gas elimination means, a processing vessel, and a solidification tank, which are the same as those of Example 4, were used.

### (Production of hollow porous film)

A hollow porous film was produced in the same manner as Example 4 except that the supply of a scavenging gas to the scavenging nozzle stopped on the way.

### <Comparative Example 3>

A hollow fiber-shaped support, a film-forming resin solution, a spinning nozzle, gas elimination means, a processing vessel, and a solidification tank, which are the same as those of Example 7, were used.

### (Production of hollow porous film)

A hollow porous film was produced in the same manner as Example 7 except that the supply of a scavenging gas to the scavenging nozzle stopped on the way.

### <Comparative Example 4>

A hollow fiber-shaped support, a film-forming resin solution, a spinning nozzle, gas elimination means, a processing vessel, and a solidification tank, which are the same as those of Example 9, were used.

### (Production of hollow porous film)

A hollow porous film was produced in the same manner as Example 9 except that the suction of a gas from the suction nozzle stopped on the way.

When the supply of a scavenging gas to the scavenging nozzle stopped in Comparative Examples 1 and 2, condensation on the inner wall of the opening of the scavenging nozzle was confirmed after about 1 minute. Further, when operation continued to be performed without change, the drops of condensation water onto the upper surface of the processing vessel from the scavenging nozzle were generated after several minutes passed from the stop of scavenging. After that, the state in which a film-forming resin solution was applied to a hollow knitted cord support became unstable soon, and the refinement behavior of the film-forming resin solution and the thickness of the applied film-forming resin solution started to fluctuate irregularly.

When the supply of a scavenging gas to the scavenging nozzle stopped in Comparative Example 3, condensation on the lower end of the protective tube was instantly confirmed. Further, when operation continued to be performed without change, the drops of condensation water onto the upper surface of the processing vessel from the protective tube were generated after several minutes passed from the stop of scavenging. After that, when another about several minutes had passed, the state in which a film-forming resin solution was applied to a hollow knitted cord support became unstable and the refinement behavior of the film-forming resin solution and the thickness of the applied film-forming resin solution started to fluctuate irregularly.

When the suction of a gas from the suction nozzle stopped in Comparative Example 4, condensation on the surface of the spinning nozzle provided above the suction nozzle was instantly confirmed. Moreover, after several minutes passed from the stop of suction, the state in which a film-forming resin solution was applied to a hollow knitted cord support became unstable and the refinement behavior of the film-forming resin solution and the thickness of the applied film-forming resin solution started to fluctuate irregularly.

In the hollow porous films obtained in Comparative Examples 1 to 4, abnormality was recognized in the surface shape of the film and the structure of a fine hole of the surface of the film at a portion where condensation water seemed to come into contact with the film-forming resin solution, in comparison with other portions.

### EXPLANATIONS OF LETTERS OR NUMERALS

- 1a, 1b, 1c, 1d, 1e, 1f, 1g:: producing device
- 2a, 2b, 2c:: producing device
- 3a:: producing device
- 10:: spinning nozzle
- 11:: support-through hole
- 12:: resin solution-flow channel
- 20A, 20B, 20C, 20D:: processing vessel
- 21:: ceiling portion
- 21a:: first opening
- 22a:: second opening
- 22c:: through hole
- 23:: side portion
- 24:: gas supply pipe
- 25:: pipe portion
- 30:: solidification tank
- 31:: first guide roller
- 32:: second guide roller
- 33:: top plate
- 33a, 33b:: opening
- 40A, 40B, 40C:: scavenging means
- 41,45:: scavenging nozzle
- 41a:: circular opening
- 41b, 45b:: gas introduction chamber
- 41c, 45c:: gas discharge port
- 41d, 45d:: resistance applying body
- 42:: gas supply means
- 43:: gas filtering means
- 44:: gas adjusting means
- 46a:: side-air guide plate
- 46b:: bottom-air guide plate
- 46c:: opening
- 50:: protective tube
- 50a:: through hole
- 51:: upper end portion
- 52:: lower end portion
- 52a:: opening
- 60A, 60B, 60C:: suction means
- 61:: suction nozzle
- 61a:: circular opening
- 61b, 65b:: gas suction chamber
- 61c, 65c:: gas suction port
- 61d, 65d:: resistance applying body
- 62:: gas suction means
- 66a:: side-air guide plate
- 66b:: bottom-air guide plate
- 66c:: opening
- A:: hollow porous film
- A':: fiber-shaped body
- A₁:: hollow string-like support
- A₂:: coating film of film-forming resin solution
- B:: solidification solution
- P, Q:: gap

## Claims

1. A device for producing a hollow porous film, the device comprising:
a spinning nozzle that discharges/shapes a film-forming resin solution containing at least a hydrophobic polymer and a favorable solvent;
a processing vessel that houses a gas containing a nonsolvent of the hydrophobic polymer and includes a first opening through which the film-forming resin solution discharged/shaped from the spinning nozzle is introduced, and a second opening from which the film-forming resin solution having come into contact with the gas containing the nonsolvent of the hydrophobic polymer is led;
a solidification tank which houses a solidification solution and into which the film-forming resin solution led from the second opening is introduced; and
gas elimination means for eliminating the gas, which flows out of the first opening and contains the nonsolvent of the hydrophobic polymer, from the vicinity of the spinning nozzle.

2. The device for producing a hollow porous film according to claim 1,
wherein the processing vessel and the solidification solution housed in the solidification tank are separated from each other, and
a gas supply pipe through which the gas containing the nonsolvent of the hydrophobic polymer is introduced into the processing vessel is mounted on the processing vessel.

3. The device for producing a hollow porous film according to claim 1,
wherein the second opening of the processing vessel is disposed so as to be closed by the solidification solution housed in the solidification tank, and
a gas supply pipe through which the gas containing the nonsolvent of the hydrophobic polymer is introduced into the processing vessel is mounted on the processing vessel.

4. The device for producing a hollow porous film according to any one of claims 1 to 3,
wherein the gas elimination means is scavenging means for eliminating a processing gas, which flows out in the vicinity of the spinning nozzle, by scavenging the processing gas with a scavenging gas or suction means for eliminating the processing gas by sucking the processing gas.

5. The device for producing a hollow porous film according to any one of claims 1 to 3,
wherein the gas elimination means includes both scavenging means for eliminating a processing gas, which flows out in the vicinity of the spinning nozzle, by scavenging the processing gas with a scavenging gas and suction means for eliminating the processing gas by sucking the processing gas.

6. The device for producing a hollow porous film according to claim 4 or 5,
wherein the scavenging means includes a scavenging nozzle that is provided on a lower surface of the spinning nozzle, and
the scavenging nozzle includes a gas discharge port through which the scavenging gas is discharged to the film-forming resin solution discharged from the spinning nozzle.

7. The device for producing a hollow porous film according to claim 6,
wherein the scavenging nozzle includes a resistance applying body that applies discharge resistance to the scavenging gas discharged from the gas discharge port.

8. The device for producing a hollow porous film according to any one of claims 4 to 7,
wherein the scavenging means includes gas filtering means for filtering the scavenging gas.

9. The device for producing a hollow porous film according to any one of claims 4 to 8,
wherein the scavenging means includes gas adjusting means for adjusting at least one of the temperature and humidity of the scavenging gas.

10. The device for producing a hollow porous film according to any one of claims 4 to 9, further comprising:
a protective tube that is disposed between the processing vessel and the scavenging nozzle so as to be separated from the processing vessel and includes a through hole into which the film-forming resin solution discharged from the spinning nozzle and the scavenging gas discharged from the scavenging nozzle are introduced.

11. The device for producing a hollow porous film according to any one of claims 4 to 10,
wherein the suction means includes a suction nozzle that is provided around the first opening on the upper surface of the processing vessel, and
the suction nozzle includes a gas suction port through which a gas flowing out of the first opening and containing a nonsolvent of the hydrophobic polymer is sucked.

12. The device for producing a hollow porous film according to claim 11,
wherein the suction nozzle includes a resistance applying body that applies resistance to the gas to be sucked into the gas suction port.

13. A method of producing a hollow porous film, the method comprising:
a spinning step of discharging a film-forming resin solution downward from a spinning nozzle by using the device for producing a hollow porous film according to any one of claims 1 to 10;
a solidification step of immersing the film-forming resin solution, which is discharged from the spinning nozzle, in a solidification solution housed in a solidification tank after allowing the film-forming resin solution to come into contact with a gas that is housed in the processing vessel and contains a nonsolvent of the hydrophobic polymer; and
a scavenging step of sending a scavenging gas to a discharge-side surface of the spinning nozzle by scavenging means,
wherein the relative humidity of the nonsolvent of the gas, which contains the nonsolvent of the hydrophobic polymer, is made to be higher than 60%, and the dew point of the scavenging gas is made to be lower than the surface temperature of the spinning nozzle.

14. A method of producing a hollow porous film, the method comprising:
a spinning step of discharging a film-forming resin solution downward from a spinning nozzle by using the device for producing a hollow porous film according to claim 11 or 12;
a solidification step of immersing the film-forming resin solution, which is discharged from the spinning nozzle, in a solidification solution housed in a solidification tank after allowing the film-forming resin solution to come into contact with a gas that is housed in the processing vessel and contains a nonsolvent of the hydrophobic polymer; and
a suction step of sucking the gas, which flows out of the first opening and contains the nonsolvent of the hydrophobic polymer, by suction means,
wherein the dew point of the nonsolvent in the atmosphere present in the vicinity of the spinning nozzle is made to be lower than the surface temperature of the spinning nozzle.

15. The method of producing a hollow porous film according to claim 13 or 14,
wherein the relative humidity of the nonsolvent in the atmosphere present in the vicinity of the spinning nozzle is made to be lower than 10%.

16. A method of producing a hollow porous film, the method comprising:
a spinning step of discharging a film-forming resin solution downward from a spinning nozzle by using the device for producing a hollow porous film according to claim 5;
a solidification step of immersing the film-forming resin solution, which is discharged from the spinning nozzle, in a solidification solution housed in a solidification tank after allowing the film-forming resin solution to come into contact with a gas that is housed in the processing vessel and contains a nonsolvent of the hydrophobic polymer;
a scavenging step of sending a scavenging gas to a discharge-side surface of the spinning nozzle by scavenging means; and
a suction step of sucking the gas, which flows out of the first opening and contains the nonsolvent of the hydrophobic polymer, and the scavenging gas,
wherein at least the gas, which flows out of the first opening and contains the nonsolvent of the hydrophobic polymer, and the scavenging gas are sucked by suction means.

17. The method of producing a hollow porous film according to any one of claims 13 to 15,
wherein the gas, which contains the nonsolvent of the hydrophobic polymer, is air in which a nonsolvent is saturated.

18. The method of producing a hollow porous film according to any one of claims 13 to 15,
wherein the gas, which contains the nonsolvent of the hydrophobic polymer, is saturated vapor of a nonsolvent.
